# EUROPÄISCHE PATENTSCHRIFT

(11) **EP 3 774 270 B1**
(45) Veröffentlichungstag und Bekanntmachung des Hinweises auf die Patenterteilung: **02.08.2023**
(21) Anmeldenummer: 19717225.7
(22) Anmeldetag: 27.03.2019
(51) Int. Cl.: B29C 48/02, B29C 48/28, B29C 48/15, B29C 70/52, B29K 105/08, B29K 21/00, B32B 37/00, B26D 1/00, B26D 1/08, B26D 5/12, B26D 5/16, B29B 7/90, B29C 70/50, B29C 48/00, B29C 48/79, B29C 48/86, B29C 48/06, B29C 48/20

(54) **VERFAHREN UND VORRICHTUNG ZUM ABSCHNEIDEN EINES EXTRUDATES**
METHOD AND DEVICE FOR CUTTING OFF AN EXTRUDATE
PROCÉDÉ ET DISPOSITIF DESTINÉS À DÉCOUPER UN EXTRUDAT

(30) Priorität: 28.03.2018 DE 102018002545
(43) Veröffentlichungstag der Anmeldung: 17.02.2021
(73) Patentinhaber: 9T Labs AG, 8048 Zurich (CH)
(72) Erfinder: EICHENHOFER, Martin, 8050 Zürich (CH); CAVOLINA, Giovanni, 8005 Zürich (CH); HOUWINK, Chester, 8006 Zürich (CH)
(74) Vertreter: Karl, Christof
(86) Internationale Anmeldenummer: PCT/EP2019/000098
(87) Internationale Veröffentlichungsnummer: WO 2019/185194

(56) Entgegenhaltungen:
- DE-A1-102015 007 317
- US-A1- 2017 144 375

## Beschreibung

Die vorliegende Erfindung betrifft ein Verfahren zur Herstellung eines Extrudates gemäß dem Oberbegriff des Anspruches 1 und eine Prozesseinheit gemäß dem Oberbegriff des Anspruches 6.

Mit Prozesseinheiten mit einer optionalen Pultrusionseinheit und einer Extrusionseinheit wird ein strangförmiges Extrudat hergestellt. In der Pultrusionseinheit wird eine Matrix, beispielsweise thermoplastischer Kunststoff, normalerweise stoffschlüssig mit Fasern verbunden und außerdem erfolgt ein Verformen des Rohextrudates als der Matrix und den Fasern in der Pultrusionseinheit. In der Extrusionseinheit erfolgt ein Verformen des Rohextrudates aus der Pultrusionseinheit zu dem Extrudat in der abschließenden Form sowie ein Abschneiden des Extrudates mit einem beweglichen Schneidelement.

Die DE 10 2015 007 317 A1 zeigt ein Verfahren zur Verstärkung einer vorhandenen Grundstruktur mit einer Verstärkungsstruktur. Die Verstärkungsstruktur wird mit einer Prozesseinheit mit einer Pultrusionseinheit und einer Extrusionseinheit hergestellt.

Die US 2017/0144375 A1 zeigt ein Verfahren, eine Vorrichtung und ein System zum Abtrennen von Material.

Die Aufgabe der vorliegenden Erfindung besteht deshalb darin, ein Verfahren zur Herstellung eines Extrudates und eine Prozesseinheit zur Verfügung zu stellen, bei dem das Extrudat einfach, zuverlässig bei einem geringen Bauraumbedarf von einem beweglichen Schneidelement abgetrennt werden kann.

Diese Aufgabe wird gelöst mit einem Verfahren zur Herstellung eines, vorzugsweise strangförmigen, Extrudates mit den Schritten: Einführen einer erhärtbaren Matrix und Fasern eines Rohextrudates in eine Pultrusionseinheit, Verformen des Rohextrudates in der Pultrusionseinheit indem eine Außenseite des Rohextrudates während des Bewegens des Rohextrudates durch einen Pultrusionskanal der Pultrusionseinheit an wenigstens einer formgebenden Wandung der Pultrusionseinheit aufliegt, Austreten des verformten Rohextrudates aus der Pultrusionseinheit, Einführen des aus der Pultrusionseinheit ausgetretenen Rohextrudates in eine Extrusionseinheit, Verformen des Rohextrudates in der Extrusionseinheit und Austreten des zu dem Extrudat umgeformten Rohextrudates aus einer Öffnung der Extrusionseinheit, Abschneiden des Extrudates indem ein Schneidelement bewegt wird, wobei ein Bauteil der Extrusionseinheit eine Rotationsbewegung ausführt und mittels einer mechanischen Koppelung zwischen dem rotierenden Bauteil und dem Schneidelement das Schneidelement bewegt wird zum Abschneiden des Extrudates. In der Pultrusionseinheit wird das Rohextrudat verformt und optional werden in der Pultrusionseinheit die Fasern stoffschlüssig mit der Matrix verbunden. Das optionale Ausführen der stoffschlüssigen Verbindung zwischen den Fasern und der Matrix in der Pultrusionseinheit hängt von der Art des verwendeten Rohextrudates ab, beispielsweise bei Hybridgarnen sind die Fasern und die Matrix von dem Einführen in die Pultrusionseinheit noch nicht stoffschlüssig miteinander verbunden, so dass in der Pultrusionseinheit eine stoffschlüssige Verbindung zwischen den Fasern und der Matrix hergestellt wird und bei Composite Tapes als Rohextrudat sind die Fasern und die Matrix von dem Einführen in die Pultrusionseinheit bereits wenigstens teilweise stoffschlüssig miteinander verbunden, so dass in der Pultrusionseinheit keine oder nur eine geringfüge stoffschlüssige Verbindung zwischen den Fasern und der Matrix hergestellt wird. Normalerweise wird jedoch auch bei Composite Tapes als Rohextrudat in der Pultrusionseinheit eine stoffschlüssige Verbindung zwischen den Fasern und der Matrix hergestellt, weil das Erwärmen und Umformen des Rohextrudates in der Pultrusionseinheit eine zusätzliche und/oder veränderte stoffschlüssige Verbindung zwischen den Fasern und der Matrix bedingt.

In einer zusätzlichen Variante wird die Rotationsbewegung des Bauteiles mittels der mechanischen Koppelung in eine Bewegung mit einer Bewegungsrichtung im Wesentlichen senkrecht zu der Rotationsachse der Rotationsbewegung des Bauteiles umgewandelt.

In einer weiteren Ausgestaltung wird von dem Schneidelement eine Rotationsbewegung und/oder eine Translationsbewegung ausgeführt. Die Art der Bewegung hängt insbesondere von der Lagerung des Schneidelements ab.

Erfindungsgemäß ist das rotierende Bauteil als eine Hülse und/oder ein zylindermantelförmiges Bauteil ausgebildet, welches den Extrusionskanal umschließt.

Zweckmäßig liegt das Schneidelement mittelbar, insbesondere mit einem Schlitten, oder unmittelbar an einer Aussparung an dem rotierenden Bauteil auf, so dass aufgrund der, vorzugsweise exzentrischen, Geometrie der Aussparung zu der Rotationsachse von dem rotierenden Bauteil auf das Schneidelement mittelbar, insbesondere mit einem Schlitten, oder unmittelbar eine Kraft aufgebracht wird zum Bewegen des Schneidelementes.

Erfindungsgemäße Prozesseinheit, umfassend: eine Pultrusionseinheit mit einem Pultrusionskanal und der Pultrusionskanal von wenigstens einer formgebenden Wandung begrenzt ist, eine Extrusionseinheit mit einem Extrusionskanal und einer Öffnung zum Austritt des Extrudates aus dem Extrusionskanal, eine Schneideeinheit mit einem beweglichen Schneidelement zum Abschneiden des Extrudates mit dem beweglichen Schneidelement, eine Fördereinrichtung zum Fördern eines Rohextrudates von der Pultrusionseinheit in die Extrusionseinheit, wobei die Schneideeinheit ein in eine Rotationsbewegung versetzbares Bauteil umfasst und das Bauteil mit einer mechanischen Koppelvorrichtung mit dem Schneidelement mechanisch gekoppelt ist, so dass die Rotationsbewegung des Bauteiles die Bewegung des Schneidelementes bedingt.

Erfindungsgemäß ist das Bauteil als eine Hülse oder ein im Wesentlichen zylindermantelförmiges Bauteil ausgebildet und das Bauteil einen Extrusionskanal der Extrusionseinheit mittelbar oder unmittelbar umschließt. In in weiteren Augestaltung ist der Abstand zwischen der Rotationsachse des in die Rotationsbewegung versetzbaren Bauteils und dem Extrusionskanal senkrecht zu der Rotationsachse des Bauteiles kleiner ist als Durchmesser, insbesondere kleiner als 70%, 50% oder 30% des Durchmessers, der Extrusionseinheit senkrecht zu der Rotationsachse des in die Rotationsbewegung versetzbaren Bauteiles. Vorzugsweise umschließt das Bauteil wenigstens 30%, 50%, 70% oder 80% der Länge des Extrusionskanales.

In einer zusätzlichen Ausgestaltung umfasst die Prozesseinheit, insbesondere die Extrusionseinheit, einen Motor, insbesondere einen Elektromotor, pneumatischen Motor oder hydraulischen Motor, und das Bauteil ist von dem Motor angetrieben.

In einer ergänzenden Ausführungsform ist an dem Bauteil eine Auflagefläche, insbesondere eine Aussparung, als mechanische Koppelvorrichtung ausgebildet und wenigstens ein Ende des Schneidelementes liegt an dem Bauteil an der Auflagefläche, insbesondere der Aussparung, mittelbar, insbesondere mit einem Schlitten, oder unmittelbar auf, so dass eine Rotationsbewegung des Bauteiles eine Bewegung des Schneidelementes aufgrund des Kontaktes des wenigstens einen Endes an dem Bauteil an der Auflagefläche, insbesondere der Aussparung, verursacht, wobei vorzugsweise auf ein anderes Ende des Schneidelementes mittelbar oder unmittelbar mit einem elastischen Element, insbesondere einer Feder, eine Kraft aufgebracht wird, so dass das wenigstens eine Ende ständig auf der Auflagefläche, insbesondere der Aussparung, mittelbar oder unmittelbar aufliegt. Als Aussparung wird auch eine Fläche des Bauteiles betrachtet, welches die Aussparung begrenzt. Die Auflagefläche kann auch an einer Geometrie des Bauteils, vorzugsweise einem Vorsprung, insbesondere ringförmigen Vorsprung, an dem Bauteil ausgebildet sein, so dass als Auflagefläche auch eine Fläche des Bauteiles betrachtet wird, welches an der Geometrie des Bauteiles ausgebildet ist.

In einer zusätzlichen Variante liegt das erste und zweite Ende mittelbar oder unmittelbar ständig auf der kreisförmigen Aussparung auf, weil der Abstand zwischen dem ersten und zweiten Ende im Wesentlichen dem Durchmesser der kreisförmigen Aussparung entspricht.

In einer weiteren Variante ist an dem Bauteil eine kreisförmige Aussparung als mechanische Koppelvorrichtung ausgebildet und ein erstes Ende des Schneidelementes auf der kreisförmigen Aussparung mittelbar, insbesondere mit einem Schlitten, oder unmittelbar aufliegt und ein zweites Ende des Schneidelementes mittelbar, insbesondere mit einem Schlitten, oder unmittelbar auf der kreisförmigen Aussparung aufliegt und die kreisförmige Aussparung exzentrisch zu der Rotationsachse des Bauteiles ausgebildet ist.

In einer weiteren Variante liegt in einem Schnitt durch das Rohextrudat senkrecht zu der Bewegungsrichtung des Rohextrudates in dem Pultrusionskanal ein erster Teil der Außenseite des Rohextrudates während des Bewegens durch die Pultrusionseinheit an wenigstens einer formgebenden Wandung der Pultrusionseinheit auf und ein zweiter Teil der Außenseite des Rohextrudates keinen Kontakt zu der wenigstens einen formgebenden Wandung aufweist und/oder in einem Schnitt durch das Rohextrudat senkrecht zu der Bewegungsrichtung des Rohextrudates in dem Pultrusionskanal die Außenseite des Rohextrudates während des Bewegens durch die Pultrusionseinheit an wenigstens einer formgebenden Wandung der Pultrusionseinheit aufliegt und der Abstand zwischen einer ersten formgebenden Wandung und einer zweiten formgebenden Wandung senkrecht zu der Bewegungsrichtung des Rohextrudates in dem Pultrusionskanal verändert wird, so dass die dem Rohextrudat zwischen der ersten und zweiten formgebenden Wandung in dem Pultrusionskanal zur Verfügung stehende Querschnittsfläche verändert wird. Die Querschnittsfläche des Rohextrudates in dem Pultrusionskanal wird damit während des Bewegens des Rohextrudates an einem identischen Schnitt senkrecht zu der Bewegungsrichtung des Rohextrudates in dem Pultrusionskanal verändert, so dass vorzugsweise eine Blockade des Rohextrudates, insbesondere aufgrund von Materialtoleranzen, im Wesentlichen vermieden werden kann. Vorzugsweise wird die dem Rohextrudat zur Verfügung stehende Querschnittsfläche aufgrund der Bewegung der ersten und zweiten formgebenden Wandung um wenigstens 5%, 10%, 20% oder 30% verändert.

In einer weiteren Ausgestaltung weist an dem zweiten Teil der Außenseite des Rohextrudates das Rohextrudat nur einen Kontakt zu der Umgebungsluft oder einem Prozessgas auf. An dem zweiten Teil der Außenseite kann somit eine Bewegung des Rohextrudates zur Vergrößerung der Querschnittsfläche des Rohextrudates ausgeführt werden.

In einer ergänzenden Variante ist die wenigstens eine formgebende Wandung, insbesondere in einer Bewegungsrichtung parallel zu dem Rohextrudat, feststehend, so dass das Rohextrudat eine Relativbewegung zu der wenigstens einen formgebenden Wandung ausführt aufgrund des Bewegens des Rohextrudates durch die Pultrusionseinheit.

In einer zusätzlichen Ausführungsform führt die wenigstens eine formgebende Wandung als Bewegungswandung die Bewegung des Rohextrudates durch die Pultrusionseinheit wenigstens teilweise, insbesondere vollständig, mit aus, so dass die Relativbewegungsgeschwindigkeit zwischen der Bewegungsgeschwindigkeit des Rohextrudates und der Bewegungsgeschwindigkeit der wenigstens einen Bewegungswandung kleiner ist als die Bewegungsgeschwindigkeit des Rohextrudates durch die Pultrusionseinheit, insbesondere die Bewegungsgeschwindigkeit des Rohextrudates und die Bewegungsgeschwindigkeit der wenigstens einen Bewegungswandung im Wesentlichen identisch sind, wobei vorzugsweise im Wesentlichen bedeutet, dass die Bewegungsgeschwindigkeit des Rohextrudates und die Bewegungsgeschwindigkeit der wenigstens einen Bewegungswandung sich um weniger als 20%, 10%, 5% oder 3% unterscheiden.

Zweckmäßig ist die wenigstens eine Wandung als Bewegungswandung von wenigstens einer Rolle und/oder von wenigstens einem von einem Mechanismus bewegten Stempel gebildet. Eine radiale Außenseite der wenigstens einen Rolle liegt auf dem Rohextrudat auf, so dass die Rotationsgeschwindigkeit der radiale Außenseite der Rolle im Wesentlichen der Translationsgeschwindigkeit der Außenseite des Rohextrudates entspricht, weil die Rolle von dem Rohextrudat in einen entsprechende Rotationsbewegung versetzt wird. Der Mechanismus ist von einem Motor, insbesondere Elektromotor, angetrieben und der Stempel wird auf die Außenseite des Rohextrudates aufgelegt, führt anschließend temporär die Translationsbewegung des Rohextrudates mit aus und anschließend wird der Stempel von dem Rohextrudat abgehoben und wieder zurück bewegt und anschließend erneut auf das Rohextrudat aufgelegt, wobei dieser Vorgang wiederholt ausgeführt wird.

In einer ergänzenden Ausgestaltung wird die erste und/oder zweite formgebende Wandung mit einer Druckkraft, insbesondere in einer Druckkraftrichtung senkrecht zu der Bewegungsrichtung des Rohextrudates, auf die Außenseite des Rohextrudates gedrückt, so dass die erste und/oder zweite formgebende Wandung in einer Bewegungsrichtung senkrecht zu der Bewegungsrichtung des Rohextrudates bewegt wird. Die Druckkraft ist notwendig, damit die formgebende Wandung eine ausreichende Verformung des Rohextrudates bewirkt.

Vorzugsweise wird die erste und/oder zweite formgebende Wandung mittels eines Aktuators, insbesondere eine Elektromotors oder eines beweglichen Kolbens, und/oder eines elastischen Elementes, insbesondere einer Feder, auf die Außenseite des Rohextrudates gedrückt.

In einer zusätzlichen Variante ist die erste und/oder zweite formgebende Wandung von einer Rolle gebildet und die Rolle wird in einer Bewegungsrichtung senkrecht zu der Bewegungsrichtung des Rohextrudates bewegt. Die Bewegung der Rolle verändert die Querschnittsfläche des Rohextrudates.

In einer weiteren Variante ist der von der wenigstens einen formgebenden Wandung begrenzte Pultrusionskanal in Bewegungsrichtung des Rohextrudates konisch verjüngend ausgebildet, so dass die Breite des Rohextrudates abnimmt und die Dicke des Rohextrudates zunimmt während des Verformens des Rohextrudates in der Pultrusionseinheit.

In einer ergänzenden Ausgestaltung werden in der Pultrusionseinheit, insbesondere in dem Pultrusionskanal, die Fasern mit der erhärtbaren Matrix stoffschlüssig verbunden. Es hängt von der Art des verwendeten Rohextrudates ab, ob in der Pultrusionseinheit die Fasern mit der Matrix stoffschlüssig verbunden werden.

In einer zusätzlichen Variante werden während des Bewegens des Rohextrudates durch den Pultrusionskanal der Pultrusionseinheit die Fasern und vorzugsweise die erhärtbare Matrix mit einer Zugkraft beansprucht.

In einer weiteren Ausführungsform weist die wenigstens eine Wandung als Bewegungswandung eine konkave und/oder konvexe Oberfläche auf und die konkave und/oder konvexe Oberfläche der Bewegungswandung liegt auf dem Rohextrudat auf, so dass eine komplementäre Geometrie in die Außenseite des Rohextrudates eingearbeitet wird.

In einer ergänzenden Ausgestaltung wird eine vorhandene Grundstruktur mit wenigstens einer Verstärkungsstruktur zu einer Tragstruktur verstärkt mit den Schritten: Herstellen der wenigstens einen Verstärkungsstruktur, Verbinden der wenigstens einen Verstärkungsstruktur mit der Grundstruktur, so dass die wenigstens eine Verstärkungsstruktur in einer Verbindungsposition mit der Grundstruktur verbunden ist und die Grundstruktur zusammen mit der wenigstens einen Verstärkungsstruktur die Tragstruktur bildet, wobei die wenigstens eine Verstärkungsstruktur, insbesondere sämtliche Verstärkungsstrukturen, aus einem Verbundmaterial mit Fasern und einer Matrix mittels Pultrusion und/oder mit Extrusion hergestellt wird bzw. werden und eine Pultrusionseinheit und/oder eine Extrusionseinheit und/oder eine Prozesseinheit im Raum bewegt wird, so dass die wenigstens eine Verstärkungsstruktur, insbesondere sämtliche Verstärkungsstrukturen, nach der Pultrusion und/oder Extrusion jeweils an der erforderlichen Verbindungsposition auf die Grundstruktur pultrudiert und/oder extrudiert wird bzw. werden und die Verstärkungsstruktur als ein Extrudat mit einem in dieser Schutzrechtsanmeldung beschriebenen Verfahren hergestellt wird.

In einer zusätzlichen Ausführungsform ist der Pultrusionskanal teilweise offen ausgebildet.

In einer weiteren Ausgestaltung ist der Pultrusionskanal im Querschnitt wenigstens teilweise im Wesentlichen u-förmig oder v-förmig ausgebildet.

In einer ergänzenden Ausgestaltung wird das Verfahren mit einer in dieser Schutzrechtsanmeldung beschriebenen Prozesseinheit ausgeführt.

Vorzugsweise ist die in dieser Schutzrechtsanmeldung beschriebene Prozesseinheit eine Prozesseinheit zur Ausführung des in dieser Schutzrechtsanmeldung beschriebenen Verfahrens.

In einer weiteren Ausgestaltung wird das Rohextrudat in der Extrusionseinheit durch einen Extrusionskanal bewegt.

Vorzugsweise umfasst der zweite Teil der Außenseite des Rohextrudates wenigstens 10%, 20% oder 30% der gesamten Außenseite des Rohextrudates, insbesondere in einem Schnitt senkrecht zu der Bewegungsrichtung des Rohextrudates in dem Pultrusionskanal.

In einer weiteren Ausgestaltung wird, insbesondere am Anfang und Ende der Pultrusionseinheit, mit Spannvorrichtungen, insbesondere Spannrollen, auf das Rohextrudat eine Kraft, insbesondere Zugkraft, aufgebracht, so dass das Rohextrudat, insbesondere die Fasern in dem Pultrusionskanal, in der Pultrusionseinheit eine Zugkraft aufweisen.

In einer weiteren Ausgestaltung wird mit wenigstens einer Umlenkvorrichtung, insbesondere wenigstens einer Umlenkrolle, das Rohextrudat vor dem Einführen in den Pultrusionskanal und/oder nach dem Ausführen aus dem Pultrusionskanal umgelenkt, so dass vorzugsweise das Rohextrudat beim Einführen in einem Winkel α₁ und/oder beim Ausführen in einem Winkel α₂ zu einer Ebene senkrecht zu der Bewegungsrichtung des Rohextrudates in dem Pultrusionskanal ausgerichtet ist. Der Winkel α₁ und der Winkel α₂ liegt vorzugsweise zwischen 0° und 90°, insbesondere zwischen 20° und 80°.

Zweckmäßig bildet die wenigstens eine Spannvorrichtungen auch wenigstens eine Umlenkeinrichtung.

In einer weiteren Ausführungsform wird bzw. werden mit der pultrudierten und/oder extrudierten wenigstens einen Verstärkungsstruktur, insbesondere sämtlichen Verstärkungsstrukturen, nach dem Pultrudieren und/oder Extrudieren und dem Auflegen auf die Grundstruktur keine Bewegung relativ zu der Grundstruktur ausgeführt und/oder die Matrix der pultrudierten und/oder extrudierten Verstärkungsstruktur, insbesondere sämtliche Verstärkungsstrukturen, an der erforderlichen Verbindungsposition an und/oder auf der Grundstruktur erhärtet und/oder die Pultrusion und Extrusion gleichzeitig und/oder kontinuierlich ausgeführt wird.

In einer weiteren Ausgestaltung wird für die Herstellung des Extrudates als erster Schritt das Pultrudieren ausgeführt und als zweiter Schritt wird das Extrudieren ausgeführt, so dass das in dem ersten Schritt teilweise hergestellte pultrudierte Rohextrudat in dem zweiten Schritt mit Extrudieren nachbearbeitet wird bzw. werden.

Zweckmäßig wird das Extrudat, insbesondere die Verstärkungsstruktur, vorzugsweise sämtliche Verstärkungsstrukturen, insbesondere kontinuierlich, hergestellt wird bzw. werden, indem die Pultrusionseinheit und/oder Extrusionseinheit und/oder Prozesseinheit, insbesondere kontinuierlich, im Raum in einer Bewegungsbahn bewegt wird an und/oder im Bereich der erforderlichen Verbindungsposition in einem oder keinem Abstand zu der Grundstruktur. Der Abstand ist im Bereich zwischen 0 mm und weniger mm oder cm. Die Pultrusionseinheit und/oder Extrusionseinheit und/oder Prozesseinheit wird im Wesentlichen an der erforderlichen Verbindungsposition bewegt, da nach dem Austreten der wenigstens einen Verstärkungsstruktur aus der Prozesseinheit die Verstärkungsstruktur noch einen geringen oder keinen Abstand zu der Grundstruktur aufweist.

In einer weiteren Variante wird die Grundstruktur von der Extrusionseinheit plastisch und vorzugsweise elastisch während des Bewegens der Extrusionseinheit im Raum verformt, so dass aufgrund der plastischen Verformung der Grundstruktur wenigstens eine Aussparung in der Grundstruktur ausgebildet wird und in die wenigstens eine Aussparung die wenigstens eine Verstärkungsstruktur an der erforderlichen Verbindungsposition eingelegt wird.

Zweckmäßig wird die Pultrusionseinheit und/oder Extrusionseinheit und/oder Prozesseinheit mit einem Roboter bewegt und/oder nach dem Pultrudieren und/oder Extrudieren je eines Extrudates mit einer Schneideeinheit das Extrudat mit den Fasen und der Matrix abgetrennt wird.

In einer ergänzenden Ausgestaltung werden das Rohextrudat und/oder das Extrudat kontinuierlich zuerst durch die Pultrusionseinheit und anschließend durch die Extrusionseinheit gefördert.

Zweckmäßig werden Hybridgarne oder Composite Tapes mit Fasern und Matrix zu der Pultrusionseinheit gefördert oder die Fasern und die Matrix werden getrennt zu der Pultrusionseinheit gefördert.

In einer zusätzlichen Ausführungsform werden in der Pultrusionseinheit während der Pultrusion mittels der Matrix die Fasern stoffschlüssig miteinander verbunden, insbesondere indem die Matrix erwärmt und/oder erhärtet wird und/oder die Matrix während des Fördern von der Pultrusionseinheit zu der Extrusionseinheit abgekühlt und/oder erhärtet wird, so dass dadurch die Fasern stoffschlüssig miteinander verbunden werden und/oder mittels einer Fördereinrichtung, beispielsweise zwei Förderrädern, das Rohextrudat gefördert wird, insbesondere indem die Fördereinrichtung auf das Rohextrudat während des Fördern des Rohextrudates von der Pultrusionseinheit zu der Extrusionseinheit auf das Rohextrudat einwirkt und/oder die Fasern und die Matrix mittels Pultrusion zuerst verformt und vorzugsweise stoffschlüssig, insbesondere mittels Erwärmen und/oder Erhärten der Matrix, miteinander verbunden werden und anschließend beim Extrudieren in der Extrusionseinheit wenigstens teilweise die Querschnittsform des Extrudates ausgeformt wird.

In einer weiteren Ausgestaltung wird als Rohextrudat eine Anordnung und/Mischung von Matrix und Fasern verstanden, unabhängig davon, ob die Fasern mit der Matrix stoffschlüssig verbunden sind oder nicht.

Zweckmäßig weist das Extrudat einen maximalen Durchmesser kleiner als 10 mm, 5 mm, 3 mm, 1 mm oder 0,7 mm auf. Das Extrudat weist beispielsweise eine Querschnittsform als Rechteck, Quadrat oder Ellipse auf mit einem maximalen Durchmesser kleiner als 10 mm, 5 mm, 3 mm, 1 mm oder 0,7 mm.

In einer weiteren Ausgestaltung wird das Rohextrudat in der Pultrusionseinheit erwärmt, insbesondere mit einer Heizeinrichtung.

In einer zusätzlichen Ausgestaltung wird in der Extrusionseinheit das Rohextrudat und/oder Extrudat verformt.

Zweckmäßig wird in der Pultrusionseinheit das Rohextrudat zuerst erwärmt, während des Förderns des Rohextrudates von der Pultrusionseinheit zu der Extrusionseinheit das Rohextrudat abkühlt und in der Extrusionseinheit das Rohextrudat nochmals erwärmt wird.

Zweckmäßig wird das Rohextrudat in der Pultrusionseinheit mit einer, vorzugsweise ersten, Kühleinrichtung, aktiv gekühlt.

In einer weiteren Ausgestaltung wird das Extrudat nach dem Fördern durch die Extrusionseinheit mit einer, vorzugsweise zweiten, Kühleinrichtung, beispielsweise einem Gebläse, aktiv gekühlt.

In einer weiteren Ausgestaltung wird das Extrudat mit Kunststoff, vorzugsweise thermoplastischen und/oder duroplastischen Kunststoff und/oder Kunststoff als reaktiver Hotmelt bzw. reaktiver Schmelzklebstoff bzw. reaktiver Schmelzpolymer, als Matrix hergestellt. Kunststoffe als reaktiver Hotmelt bzw. reaktiver Schmelzklebstoff bzw. reaktiver Schmelzpolymer sind Kunststoffe die, vorzugsweise zunächst thermoplastische Eigenschaften aufweisen und/oder ein thermoplastischer Kunststoff sind, und nach wenigstens einem Veränderungsparameter, beispielsweise das Erwärmen bzw. Erhitzen und/oder das Aussetzten an Feuchtigkeit und/oder der Bestrahlung mit UV-Licht und/oder einem Sauerstoffentzug, durch eine chemische Veränderung, insbesondere wenigstens eine chemische Reaktion, duroplastische Eigenschaften aufweisen und/oder ein duroplastischer Kunststoff sind. Bei einem Veränderungsparameter des Erwärmens bzw. Erhitzens kann das Erwärmen und/oder Erhitzen in der Pultrusionseinheit und/oder Extrusionseinheit als Veränderungsparameter genutzt werden. Duroplastische Kunststoffe sind auch bei einem Erwärmen bzw. Erhitzen zu 100% ein Festkörper, d. h. das Erhärten ist nicht durch Erwärmen umkehrbar. Das Erwärmen und/oder Erhitzen in der Pultrusionseinheit und/oder Extrusionseinheit wird beispielsweise auf Temperaturen zwischen 60°C und 200° C ausgeführt. Bei einem reaktiven Hotmelt beispielsweise auf Basis von Polymeren wird die chemische Veränderung durch eine Verbindung zwischen bestehenden Makromolekularketten (sog. Cross links) ausgeführt. Reaktive Hotmelts sind beispielsweise auf Basis von EVA (Ethylen-Vinyl-Acetat) und Polyester oder auf Basis von PA (Polyamid) oder auf Basis von Polymeren oder auf Basis von PUR aufgebaut. Reaktive Hotmelts können auch teilweise Stoffe aufweisen, die keine Kunststoffe bzw. Klebstoffe sind. Klebstoffe werden insofern auch als Kunststoffe betrachtet. Wesentliche Eigenschaft des reaktiven Hotmelts bzw. reaktiven Schmelzklebstoffes bzw. reaktiven Schmelzpolymers ist somit, dass nach dem Erhärten aufgrund des Einwirkens des wenigstens einen Veränderungsparameters ein Erwärmen der wenigstens einen Verstärkungsstruktur kein Schmelzen des reaktiven Hotmelts bzw. der Matrix aus dem reaktiven Hotmelt bewirkt, so dass trotz des Erwärmens auf für die Anwendung normale Temperaturen, beispielsweise auf Temperaturen bis 200° C oder 300° C, die Tragfähigkeit und/oder Steifigkeit des Extrudates weiterhin gewährleistet ist.

In einer zusätzlichen Ausgestaltung wird das Extrudat mit Fasern als Glasfasern, Karbonfasern und/oder Aramidfasern, hergestellt.

In einer weiteren Ausführungsform wird vor dem Auflegen der wenigstens einen Verstärkungsstruktur auf die Oberfläche der Grundstruktur an der Oberfläche der Grundstruktur lokal im Bereich einer späteren Kontaktfläche zwischen der wenigstens einen Verstärkungsstruktur und der Grundstruktur der Werkstoff der Grundstruktur abgetragen.

Vorzugsweise wird die Grundstruktur spanabhebend abgetragen, insbesondere mit einem Werkzeug, vorzugsweise Fräswerkzeug, und das Werkzeug wird von einem Roboter entlang der Oberfläche der Grundstruktur bewegt.

In einer zusätzlichen Variante wird in die Grundstruktur aufgrund des Abtragens und/oder Verformens, insbesondere plastischen Verformens, des Werkstoffes der Grundstruktur eine, vorzugsweise längliche, Aussparung eingearbeitet und in die Aussparung wird anschließend die wenigstens eine Verstärkungsstruktur eingeführt, so dass eine formschlüssige Verbindung zwischen der wenigstens einen Verstärkungsstruktur und der Grundstruktur an der Aussparung, insbesondere nach dem Abkühlen und Erhärten der Matrix, ausgebildet wird.

In einer ergänzenden Ausgestaltung wird vor dem Auflegen der wenigstens einen Verstärkungsstruktur auf die Oberfläche der Grundstruktur die Oberfläche der Grundstruktur lokal im Bereich einer späteren Kontaktfläche zwischen der wenigstens einen Verstärkungsstruktur und der Grundstruktur mit einer Grundstrukturheizeinrichtung, insbesondere einem Laser oder einem Infrarotstrahler oder einem Heizgebläse, erwärmt.

In einer weiteren Ausführungsform wird die Grundstrukturheizeinrichtung von einem Roboter entlang der Oberfläche der Grundstruktur bewegt und/oder aufgrund des Erwärmens der Oberfläche der Grundstruktur wird lokal im Bereich einer späteren Kontaktfläche zwischen der wenigstens einen Verstärkungsstruktur und der Grundstruktur der Werkstoff der Grundstruktur seine Eigenschaft verändert, insbesondere zähfließend und/oder klebrig und/oder flüssig, so dass eine stoffschlüssige Verbindung zwischen der Matrix der wenigstens einen Verstärkungsstruktur und dem Werkstoff der Grundstruktur, insbesondere nach dem Abkühlen, ausgebildet wird.

In einer ergänzenden Ausgestaltung wird vor dem Auflegen der wenigstens einen Verstärkungsstruktur auf die Oberfläche der Grundstruktur lokal im Bereich einer späteren Kontaktfläche zwischen der wenigstens einen Verstärkungsstruktur und der Grundstruktur mit einer Zugabevorrichtung ein Stoff, insbesondere ein Klebstoff und/oder ein Haftvermittler, zur Verbesserung der Verbindung zwischen der wenigstens einen Verstärkungsstruktur und der Grundstruktur aufgebracht.

Vorzugsweise wird die Zugabevorrichtung von einem Roboter entlang der Oberfläche der Grundstruktur bewegt.

In einer ergänzenden Ausgestaltung wird zuerst die Grundstruktur hergestellt oder zur Verfügung gestellt und anschließend wird die wenigstens eine Verstärkungsstruktur hergestellt.

Zweckmäßig wird die Grundstruktur mit einem anderen Verfahren hergestellt als die wenigstens eine Verstärkungsstruktur.

Zweckmäßig ist die Grundstruktur aus Metall, insbesondere Stahl und/oder Aluminium, und/oder aus Kunststoff, insbesondere faserverstärkten Kunststoff oder Styropor oder Plastikschaum oder Plastik, und/oder in Sandwichbauweise aus zwei unterschiedlichen Materialien ausgebildet.

In einer weiteren Variante ist die Grundstruktur als ein flächiges Bauteil, eine Platte, eine Scheibe, eine Teilkugelschale, eine Kuppel, ein Rotationsteilellipsoid, eine Wanne oder ein Becher ausgebildet.

Die Erfindung umfasst ferner ein Computerprogramm mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Bestandteil der Erfindung ist außerdem ein Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Im Nachfolgenden werden Ausführungsbeispiele der Erfindung unter Bezugnahme auf die beigefügten Zeichnungen näher beschrieben.

Es zeigt:
- Fig. 1: einen vereinfachten Längsschnitt einer Prozesseinheit mit einer Pultrusionseinheit und Extrusionseinheit zur Durchführung des Verfahrens,
- Fig. 2: eine Seitenansicht der Prozesseinheit während der Durchführung des Verfahrens,
- Fig. 3: einen Querschnitt einer Grundstruktur vor dem Aufbringen einer Verstärkungsstruktur,
- Fig. 4: den Querschnitt der Grundstruktur gemäß Fig. 3 nach dem Aufbringen der Verstärkungsstruktur,
- Fig. 5: eine perspektivische Ansicht einer Pultrusionseinheit aus dem Stand der Technik,
- Fig. 6: einen Schnitt A-A der Pultrusionseinheit gemäß Fig. 6,
- Fig. 7: einen Schnitt B-B der Pultrusionseinheit gemäß Fig. 6,
- Fig. 8: einen Schnitt C-C der Pultrusionseinheit gemäß Fig. 6,
- Fig. 9: eine perspektivische Ansicht einer erfindungsgemäßen Pultrusionseinheit in einem ersten Ausführungsbeispiel,
- Fig. 10: einen Längsschnitt der Pultrusionseinheit durch einen Pultrusionskanal,
- Fig. 11: einen Schnitt A-A der Pultrusionseinheit gemäß Fig. 9,
- Fig. 12: einen Schnitt B-B der Pultrusionseinheit gemäß Fig. 9,
- Fig. 13: einen Schnitt C-C der Pultrusionseinheit gemäß Fig. 9,
- Fig. 14: eine perspektivische Ansicht einer erfindungsgemäßen Pultrusionseinheit in einem zweiten Ausführungsbeispiel,
- Fig. 15: einen Schnitt A-A der Pultrusionseinheit gemäß Fig. 14,
- Fig. 16: eine perspektivische Ansicht einer erfindungsgemäßen Pultrusionseinheit in einem dritten Ausführungsbeispiel,
- Fig. 17: einen Schnitt A-A der Pultrusionseinheit gemäß Fig. 16,
- Fig. 18: einen Schnitt B-B der Pultrusionseinheit gemäß Fig. 16,
- Fig. 19: einen Schnitt C-C der Pultrusionseinheit gemäß Fig. 16,
- Fig. 20: eine perspektivische Ansicht einer erfindungsgemäßen Pultrusionseinheit in einem vierten Ausführungsbeispiel,
- Fig. 21: einen Querschnitt eines Pultrusionskanales in einem ersten Ausführungsbeispiel,
- Fig. 22: einen Querschnitt eines Pultrusionskanales in einem zweiten Ausführungsbeispiel,
- Fig. 23: einen Querschnitt eines Pultrusionskanales in einem dritten Ausführungsbeispiel,
- Fig. 24: einen Querschnitt eines Pultrusionskanales in einem vierten Ausführungsbeispiel,
- Fig. 25: einen Querschnitt einer Rolle in einem ersten Ausführungsbeispiel,
- Fig. 26: einen Querschnitt einer Rolle in einem zweiten Ausführungsbeispiel,
- Fig. 27: einen Querschnitt einer Rolle in einem dritten Ausführungsbeispiel,
- Fig. 28: einen Querschnitt einer Rolle in einem vierten Ausführungsbeispiel,
- Fig. 29: eine Ansicht einer erhärtbaren Masse und von Fasern in einem ersten Ausführungsbeispiel für die Zuführung in die Pultrusionseinheit,
- Fig. 30: eine Ansicht einer erhärtbaren Masse und von Fasern in einem zweiten Ausführungsbeispiel für die Zuführung in die Pultrusionseinheit,
- Fig. 31: eine perspektivische Ansicht einer Extrusionseinheit in einem weiteren Ausführungsbeispiel,
- Fig. 32: einen Längsschnitt der Extrusionseinheit gemäß Fig. 32,
- Fig. 33: eine Vorderansicht der Extrusionseinheit gemäß Fig. 32 ohne Abdeckung und Düsenteil mit dem Schneidelement in einer ersten Stellung,
- Fig. 34: eine Vorderansicht der Extrusionseinheit gemäß Fig. 32 ohne Abdeckung und Düsenteil mit dem Schneidelement in einer zweiten Stellung.

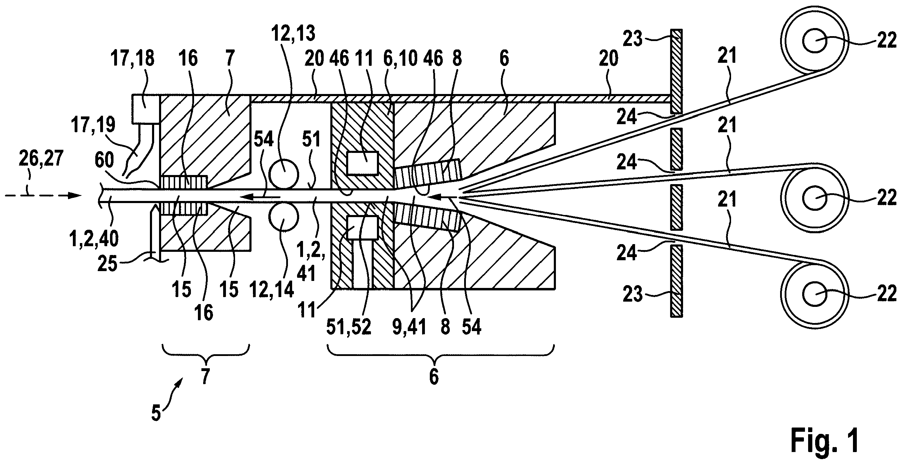

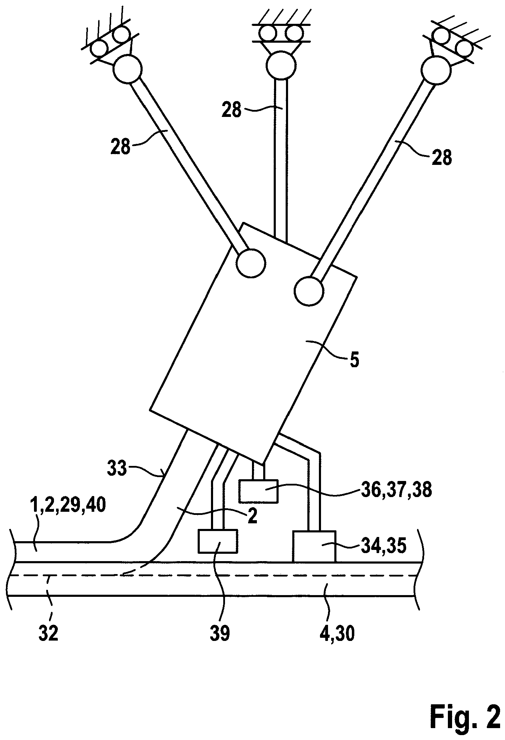

In Fig. 1 und 2 ist eine erfindungsgemäße Prozesseinheit 5 zur Herstellung einer Verstärkungsstruktur 1 als ein Extrudat 40 dargestellt. Die Prozesseinheit 5 umfasst eine Pultrusionseinheit 6 und eine Extrusionseinheit 7. In der Pultrusionseinheit 6 ist ein Pultrusionskanal 9 ausgebildet und in einer Richtung von rechts nach links als einer Bewegungsrichtung 54 eines Rohextrudates 41 gemäß der Darstellung in Fig. 1 ist der Pultrusionskanal 9 an einem Abschnitt zunächst konisch verjüngend mit einer sich verkleinernden Breite 42 ausgebildet und anschließend mit einer konstanten Breite 42. Der Pultrusionskanal 9 ist von formgebenden Wandungen 46 begrenzt. An dem Pultrusionskanal 9 ist in einer Richtung gemäß der Darstellung in Fig. 1 von rechts nach links als der Bewegungsrichtung 42 sowie in einer Förderrichtung von Hybridgarnen 21 bzw. des herzustellenden Extrudates 40 zuerst eine erste Heizeinrichtung 8 angeordnet und anschließend eine erste Kühleinrichtung 10. Die Heizeinrichtung 8 und die Kühleinrichtung 10 bilden auch die formgebenden Wandungen 46. An der ersten Kühleinrichtung 10 ist ein Kühlkanal 11 ausgebildet, durch den ein Kühlfluid durchgeleitet wird zur Kühlung des Rohextrudates 41. Der Pultrusionskanal 9 ist unter der Zeichenebene von Fig. 1 von einer weiteren, nicht dargestellten formgebenden Wandung 46 begrenzt und über der Zeichenebene von Fig. 1 ist keine formgebende Wandung 46 vorhanden. Ein erster Teil 52 der Außenseite 51 des Rohextrudates 41 bzw. der Matrix 44 mit den Fasern 45 liegt auf den formgebenden Wandungen 46 der Pultrusionseinheit 6 auf. Ein anderer, nicht in Fig. 1 dargestellter zweiter Teil 53 der Außenseite 51 des Rohextrudates 41 weist keinen Kontakt zu einer formgebenden Wandung 46 auf und steht nur in Kontakt mit der Umgebungsluft. Der Pultrusionskanal 9 ist somit teilweise offen über der Zeichenebene von Fig. 1 ausgebildet. Als ein Rohextrudat 41 wird bereits eine Anordnung und/oder Mischung aus Matrix 44 und Fasern 45 betrachtet vor dem Einführen in den Pultrusionskanal 9, so dass die Matrix 44 und die Fasern 45 auch im gesamten Pultrusionskanal 9 und vor dem Pultrusionskanal 9 als Rohextrudat 41 bezeichnet werden ohne oder mit einer stoffschlüssigen Verbindung zwischen den Fasern 45 und der Matrix 44.

Die Extrusionseinheit 7 umfasst einen Extrusionskanal 15 und der Extrusionskanal 15 umfasst einen ersten sich konisch verjüngenden Abschnitt und einen zweiten Abschnitt mit einem konstanten Durchmesser. An dem zweiten Abschnitt des Extrusionskanales 15 mit dem konstanten Durchmesser ist eine zweite Heizeinrichtung 16 ausgebildet. Die erste und zweite Heizeinrichtung 8, 16 ist vorzugsweise als eine elektrische Widerstandsheizung ausgebildet. In der Förderrichtung des Extrudates 40 durch den Extrusionskanal 15 ist zuerst der konisch sich verjüngende Abschnitt des Extrusionskanales 15 und anschließend der Abschnitt des Extrusionskanales 15 mit dem konstanten Durchmesser ausgebildet. Zwischen der Pultrusionseinheit 6 und der Extrusionseinheit 7 ist eine Fördereinrichtung 12 ausgebildet. Die Fördereinrichtung 12 umfasst ein erstes Förderrad 13 und ein zweites Förderrad 14, welche von einem nicht dargestellten Elektromotor angetrieben werden. Das Rohextrudat 41 ist zwischen den beiden Förderräden 13, 14 angeordnet, so dass das Rohextrudat 41 mit der Fördereinrichtung 12 aus der Pultrusionseinheit 6 herausgezogen wird und mit der Fördereinrichtung 12 in die Extrusionseinheit 7 eingeschoben wird.

Die Pultrusionseinheit 6 und die Extrusionseinheit 7 sind mit einem Verbindungsteil 20, beispielsweise einem in Fig. 1 nur teilweise dargestellten Gehäuse, miteinander verbunden. An dem Verbindungsteil 20 ist ferner ein Zuführungsteil 23 mit drei Führungsbohrungen 24 befestigt. Auf drei Rollen 22 als Speicherrollen 22 ist jeweils ein Hybridgarn 21 aufgerollt. Das Hybridgarn 21 besteht aus einer Faser 45 als Glasfaser 45 und weist ferner die Matrix 44 aus einem thermoplastischen Kunststoff auf. Die Matrix 44 als dem thermoplastischen Kunststoff ist dabei in dem Hybridgarn 21 als eine faserförmige Matrix 44 bzw. als eine Matrixfaser 44 angeordnet. Das Hybridgarn 21 ist biegbar und kann somit von der Rolle 22 abgerollt werden. An der Extrusionseinheit 7 ist ferner eine zweite Kühleinheit 17 befestigt. Die zweite Kühleinheit 17 umfasst ein Gebläse 18 und ein Kühlrohr 19. Mittels des Gebläses 18 wird Umgebungsluft durch das Kühlrohr 19 geleitet, gezielt zu dem Bereich der Verstärkungsstruktur 1 unmittelbar nach dem Verlassen der Extrusionseinheit 7. Eine Schneideeinheit 25 dient dazu, das an der Extrusionseinheit 7 extrudierte Extrudat 40 soweit erforderlich abzuschneiden und dadurch ein Ende des Extrudates 40 herstellen zu können.

Während der Herstellung der Verstärkungsstruktur 1 als dem Extrudat 40 aus dem Verbundmaterial 29 mit den Fasern 45 und der Matrix 44 wird das Extrudat 40 gemäß der Darstellung in Fig. 1 zuerst durch die Pultrusionseinheit 6 und anschließend durch die Extrusionseinheit 7 mittels der Fördereinrichtung 12 gefördert, jedoch erfolgen beide Vorgänge aufgrund der Länge der Stäbe 2 und Abstandes zwischen der Pultrusionseinheit 6 und der Extrusionseinheit 7 gleichzeitig. Während des Förderns des Rohextrudates 41 wird somit der Hybridgarn 21 von den drei Rollen 22 abgerollt und in den konisch sich verjüngenden Abschnitt des Pultrusionskanales 9 eingeführt. An dem sich konisch verjüngenden Abschnitt des Pultrusionskanales 9 mit einer sich verkleinernder Breite 42 in der Bewegungsrichtung 54 werden die drei Hybridgarne 21 mit der ersten Heizeinrichtung 8 erwärmt, so dass der thermoplastische Kunststoff der Matrix 44 an den Hybridgarnen 21 schmilzt und dadurch die Glasfasern 45 in den drei Hybridgarnen 21 mittels der Matrix 44 aus dem thermoplastischen Kunststoff stoffschlüssig miteinander verbunden werden als Prozessschritt der Pultrusion. Ferner wird in der Pultrusionseinheit 6 als weiterer Prozessschritt ein Umformen oder Verformen der Matrix 44 und der Fasern 45 bzw. des Rohextrudates 41 ausgeführt, damit das aus der Pultrusionseinheit 6 austretende Rohextrudat 41 die geeignete Form für die Extrusionseinheit 7 aufweist.

Anschließend wird das Rohextrudat 41 zu dem Abschnitt des Pultrusionskanales 9 mit der ersten Kühleinrichtung 10 gefördert bzw. bewegt, so dass dadurch das Rohextrudat 41 abgekühlt und dadurch teilweise erhärtet wird. Nach dem Austreten des Rohextrudates 41 wird das Rohextrudat 41 von der Fördereinrichtung 12 in die Extrusionseinheit 7 eingefördert bzw. hineingeführt. Aufgrund des Abkühlens des Rohextrudates 41 in der ersten Kühleinrichtung 10 kann das Rohextrudat 41 von der Fördereinrichtung 12 gefördert werden. In der Extrusionseinheit 7 wird das Rohextrudat 41 als Verbundmaterial 29 mit den Fasern 45 und der Matrix 44 an dem Abschnitt des Extrusionskanales 15 mit dem konstanten Durchmesser von der zweiten Heizeinrichtung 16 wieder soweit erwärmt, dass an dem Endbereich in der Förderrichtung des Extrusionskanales 15 die abschließende Formgebung der Querschnittsform der herzustellenden Verstärkungsstruktur 1 an einer Öffnung 60 als dem Ende des Extrusionskanales 15 ausgeformt wird. Die Öffnung 60 weist eine kreisförmige Querschnittsform auf, so dass dadurch mittels der Prozesseinheit 5 Verstärkungsstrukturen 1 als Extrudate 40 mit einem kreisförmigen Querschnitt hergestellt werden. Nach dem Austreten des Extrudates 40 aus dem Extrusionskanal 15 der Extrusionseinheit 7 wird von dem Gebläse 18 durch das Kühlrohr 19 Umgebungsluft als Kühlluft zu dem Stab 2 als Extrudat 40 geleitet, so dass dadurch eine schnellere Abkühlung der Verstärkungsstrukturen 1 erreicht werden kann.

Die mit dem Verfahren hergestellten Verstärkungsstrukturen 1 als Extrudate 40 sind als gerade oder gekrümmte Stäbe 2 ausgebildet. Die Stäbe 2 werden von der Prozesseinheit 5 an den erforderlichen Verbindungsposition auf einer Grundstruktur 4 hergestellt, so dass die Prozesseinheit 5 auf einer Bewegungsbahn 26 als einer Geraden 27 oder gekrümmten Linie 27 mittels Bewegungsarmen 28 eines in Fig. 2 stark vereinfacht dargestellten Roboters bewegt wird. Die Bewegungsbahn 26 als Gerade 27 oder gekrümmte Linie 27 entspricht dabei im Wesentlichen der Längsachse der von der Prozesseinheit 5 hergestellten Verstärkungsstruktur 1. Nach der Herstellung der Stäbe 2 und dem Auflegen der Stäbe 2 bzw. der Verstärkungsstrukturen 1 auf die Oberfläche der Grundstruktur 4 ist keine Relativbewegung bzw. Bewegung der hergestellten Stäbe 2 zu anderen bereits hergestellten oder noch herzustellenden Stäbe 2 oder zu der Grundstruktur 2 erforderlich, da die Stäbe 2 mit der Prozesseinheit 5 bereits an der erforderlichen Verbindungsposition auf der Grundstruktur 4 hergestellt werden. In Fig. 2 sind die Rollen 22 und die Hybridgarne 21 nicht dargestellt. Die Verstärkungsstruktur 1 besteht aus Stäben 2 aus dem Verbundmaterial 29, nämlich mit Fasern 45 als Glasfasern 45 und der Matrix 44 als thermoplastischen Kunststoff.

In einem weiteren, nicht dargestellten Ausführungsbeispiel der Prozesseinheit 5 sind an den Rollen 22 die Fasern, z. B. Glas-, Aramid- oder Karbonfasern, aufgewickelt und die Matrix als dem thermoplastischen Kunststoff wird gesondert in einem Behälter mit einer Behälterheizung in einem erwärmten Zustand aufbewahrt und mittels einer nicht dargestellter Matrixfördereinrichtung zu der Pultrusionseinheit 6 gefördert. Die Pultrusionseinheit 6 und die Extrusionseinheit 7 kann auch als nur ein Bauteil ausgebildet sein, indem beispielsweise nach dem Pultrudieren unmittelbar das Extrudieren, d. h. die abschließende Formgebung einer Außenseite 33 des Stabes 2 als Extrudat 40 ausgeführt wird, ohne dass die Fördereinrichtung 12 zwischen der Extrusionseinheit 7 und der Pultrusionseinheit 6 angeordnet ist.

In einem weiteren, nicht dargestellten Ausführungsbeispiel wird anstelle von thermoplastischem Kunststoff als der Matrix ein duroplastischer Kunststoff oder ein Kunststoff als ein reaktiver Hotmelt bzw. reaktiver Schmelzklebstoff bzw. reaktiver Schmelzpolymer eingesetzt. Der duroplastische Kunststoff wird gesondert in einem Behälter gelagert und mittels einer Matrixfördereinrichtung der Extrusionseinheit 7 und/oder der Pultrusionseinheit 6 zugeführt. Das Erhärten des duroplastischen Kunststoffes erfolgt dabei mittels einer Bestrahlung oder einer Zugabe von chemischen Additiven. Das Erhärten des Kunststoffes als reaktiver Hotmelt bzw. reaktiver Schmelzklebstoff bzw. reaktiver Schmelzpolymer wird insbesondere durch das Erwärmen als Veränderungsparameter während der Verarbeitung der Matrix in der Pultrusionseinheit 6 und/oder in der Extrusionseinheit 7 ausgeführt. Abweichend hiervon kann das Erhärten des Kunststoffes als reaktiver Hotmelt auch durch Feuchtigkeit und/oder UV-Licht und/oder Sauerstoffentzug ausgeführt werden. Bei einer Erhärtung durch UV-Licht erfolgt somit nach dem Auflegen der wenigstens einen Verstärkungsstruktur 1 auf die Grundstruktur 4 eine Bestrahlung der wenigstens einen Verstärkungsstruktur 1 mit UV-Licht mittels einer UV-Lichtquelle (nicht dargestellt).

In einem weiteren, nicht dargestellten Ausführungsbeispiel der Prozesseinheit 5 sind an den Rollen 22 die Composite Tapes aufgewickelt. Bei Composite Tapes sind aufgrund einer Vorkonsolidierung der Matrix 44 die Fasern 45 bereits mit der Matrix 44 wenigstens teilweise, insbesondere vollständig, stoffschlüssig verbunden, so dass in der Pultrusionseinheit 6 im Regelfall nur noch eine geringfügige stoffschlüssige Verbindung zwischen den Fasern 45 und der Matrix 44 hergestellt wird.

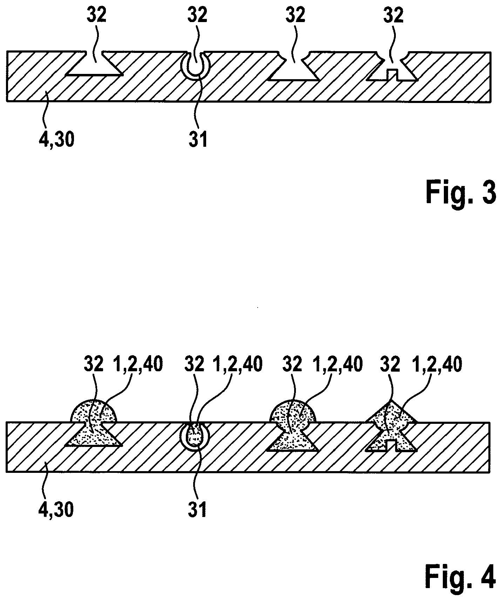

An der Prozesseinheit 5 sind Vorbearbeitungseinrichtungen 34, 36, 38 als ein Werkzeug 34 als ein Fräswerkzeug 35, eine Grundstrukturheizeinrichtung 36, beispielsweise ein Laser 37 oder ein Infrarotstrahler 38, und eine Zugabevorrichtung 39 für Klebstoff 31 befestigt (nur in Fig. 2 dargestellt). Das Werkzeug 34, die Grundstrukturheizeinrichtung 36 und die Zugabevorrichtung 39 sind mit mechanischen Einrichtungen relativ zu der Prozesseinheit 5 beweglich, so dass die Vorbearbeitungseinrichtungen 34, 36, 38 an unterschiedliche Bewegungsbahnen 26 mit unterschiedlichen Oberflächen von Grundstrukturen 4 in der erforderlichen Position angeordnet werden können. Vor dem Auflegen der an der Prozesseinheit 5 hergestellten Verstärkungsstruktur 1 auf die Oberfläche der Grundstruktur 4 wird mit dem Fräswerkzeug 35 eine längliche Aussparung 32 (Fig. 3) mit einer beliebigen Querschnittsform, abhängig von der Geometrie des Fräswerkzeuges 35, in die Grundstruktur 4 eingefräst. Die Aussparungen 32 weisen dabei einen Hinterschnitt auf, so dass nach dem Abkühlen und Erhärten des Verbundmateriales 29 mit den Fasern und der Matrix innerhalb der Aussparung 32 eine formschlüssige Verbindung der Stäbe 2 als Verstärkungsstruktur 1 an der Grundstruktur 1, beispielsweise Platten 30, ausgebildet ist.

Anschließend wird die Oberfläche der Grundstruktur 4 im Bereich der Aussparung 32 mit der Grundstrukturheizeinrichtung 36 erwärmt, so dass sich die Matrix des Verbundmateriales 29 stoffschlüssig mit dem Werkstoff der Grundstruktur 4 verbinden kann und nach dem Abkühlen und Erhärten des Verbundmateriales 29 und der Grundstruktur 4 eine feste stoffschlüssige Verbindung zwischen der Grundstruktur 4 und der Verstärkungsstruktur 1 besteht.

Anschließend wird mit der Zugabevorrichtung 39 wird auf die Oberfläche der Grundstruktur 4 im Bereich der Aussparung 32 Klebstoff 31 aufgebracht, um nach dem Auflegen der Verstärkungsstruktur 1 auf die Grundstruktur 4 und dem Erhärten des Klebstoffes 31 die Verstärkungsstruktur 1 stoffschlüssig mit der Grundstruktur 4 zu verbinden. Im Allgemeinen wird abhängig vom Werkstoff der Grundstruktur 4 nur die Grundstrukturheizeinrichtung 36 oder nur die Zugabevorrichtung 39 betrieben. Bei einer Grundstruktur 4 aus Metall, beispielsweise Stahl oder Aluminium, wird nur die Zugabevorrichtung 39 und nicht die Grundstrukturheizeinrichtung 36 betrieben. Bei einer Grundstruktur 4 aus thermoplastischen Kunststoff wird nicht die Zugabevorrichtung 39 und nur die Grundstrukturheizeinrichtung 36 betrieben.

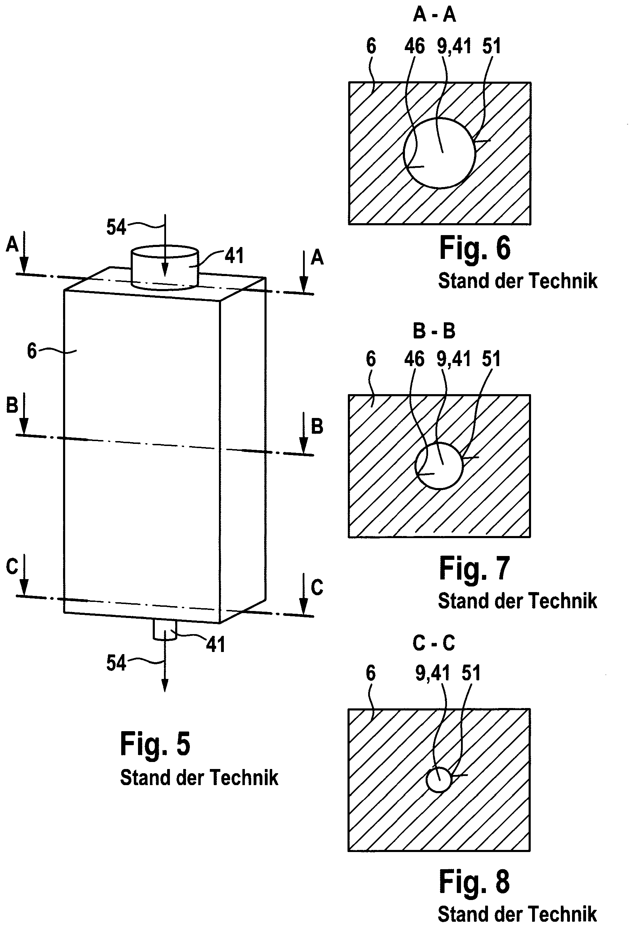

In den Fig. 5 bis 8 ist eine aus dem Stand der Technik bekannte Pultrusionseinheit 5 einer aus dem Stand der Technik bekannten Prozesseinheit 5 (nicht dargestellt) dargestellt, wobei aus Gründen der Einfachheit notwendige Funktionskomponenten wie eine erste Heizeinrichtung oder eine erste Kühleinrichtung nicht dargestellt sind. Das Rohextrudat 41 wird durch einen Pultrusionskanal 9 bewegt. Der in der Querschnittsform kreisförmige und sich in der Bewegungsrichtung 54 des Rohextrudates 41 konisch verjüngende Pultrusionskanal 9 ist von einer formgebenden Wandung 46 des Pultrusionseinheit 6 begrenzt. Die gesamte Außenseite 51 des Rohextrudates 41 liegt in dem Schnitt in Fig. 6 bis 8 senkrecht zu der Bewegungsrichtung 54 des Rohextrudates 41 auf der formgebenden Wandung 46 auf, so dass ein geschlossener Pultrusionskanal 9 vorhanden ist. Bei einer kleinen Querschnittsform des Pultrusionskanales 9, insbesondere im Endbereich, im Bereich kleiner als 1 mm Durchmesser kann es dadurch bei Materialtoleranzen der Fasern 45 und der Matrix 44 zu Verstopfungen und Blockaden kommen, so dass die Pultrusionseinheit 6 nicht mehr funktionsfähig ist, d. h. die Prozesseinheit 5 kein Extrudat 40 mehr herstellen kann. Die dem Rohextrudat 41 zur Verfügung stehende Querschnittsfläche ist von dem geschlossenen Pultrusionskanal 9 begrenzt und lokale Erhöhungen der Querschnittsfläche des Rohextrudates 41 zur Vermeidung von Blockaden sind konstruktiv ausgeschlossen. Aufgrund der geschlossenen Form des Pultrusionskanales 9 weist das Rohextrudat 41 einen großen Druck auf, der aufgrund der sich verkleinernden Querschnittsfläche während der Bewegung des Rohextrudates 41 durch den Pultrusionskanal 9 stark zunimmt.

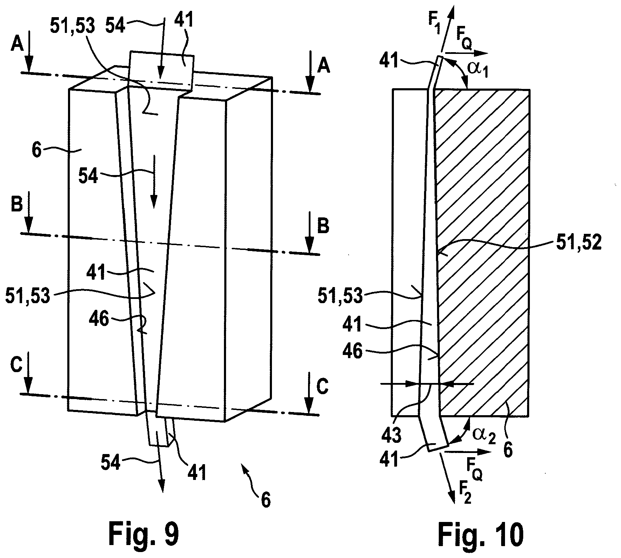

In den Fig. 9 bis 13 ist ein erstes Ausführungsbeispiel der Pultrusionseinheit 6 der erfindungsgemäßen Prozesseinheit 5 dargestellt. Aus Gründen der Einfachheit sind notwendige Funktionskomponenten wie eine erste Heizeinrichtung oder eine erste Kühleinrichtung nicht dargestellt. An den formgebenden Wandungen 46 ist eine Heizeinrichtung (nicht dargestellt) ausgebildet, so dass das Rohextrudat 41 von den beheizten formgebenden Wandungen 46 erwärmt wird, damit die Matrix 44 verformt werden kann und sich optional die Fasern 45 stoffschlüssig mit der Matrix 44 verbinden bei der Pultrusion in der Pultrusionseinheit 6. In der Pultrusionseinheit 6 werden somit die Prozessschritte des Verformens des Rohextrudates 41 und vorzugsweise des stoffschlüssigen Verbindens der Fasern 45 mit der Matrix 44 ausgeführt. Der im Wesentlichen u-förmige Pultrusionskanal 9 ist teilweise offen, so dass das Rohextrudat 41 an der Außenseite 51 an einem ersten Teil 52 der Außenseite 51 auf feststehenden formgebenden Wandungen 46 aufliegt und an einem zweiten Teil 53 der Außenseite 51 die Außenseite 51 keinen Kontakt zu der formgebenden Wandung 46 aufweist, d. h. lediglich in Kontakt zur Umgebungsluft steht. Das Rohextrudat 41 weist wegen des offenen zweiten Teils 52 der Außenseite 51 einen sehr kleinen und im Wesentlichen konstanten Druck während des Bewegens des Rohextrudates 41 durch den Pultrusionskanal 6 auf.

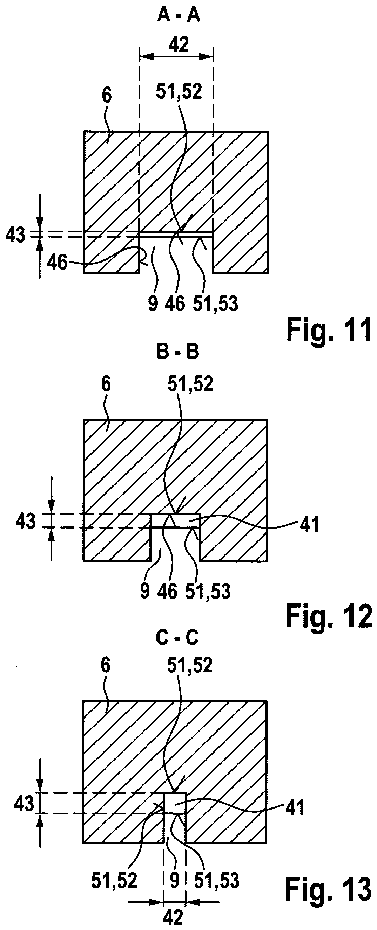

Die drei, insbesondere in einer Bewegungsrichtung 54 des Rohextrudates 41, feststehenden formgebenden Wandungen 46 stehen in dem Schnitt in Fig. 11 bis 13 senkrecht zu der Bewegungsrichtung 54 des Rohextrudates 41 aufeinander senkrecht und zwei formgebende Wandungen 46 sind in dem Schnitt parallel zueinander ausgerichtet. Das Rohextrudat 41 in dem Pultrusionskanal 9 weist eine Breite 42 und eine Dicke 43 auf. Die in dem Schnitt parallel zueinander ausgerichteten formgebenden Wandungen 46 sind ferner in der Bewegungsrichtung 54 des Rohextrudates 41 konisch verjüngend zueinander ausgebildet (Fig. 9), so dass bei der Bewegung des Rohextrudates 41 durch den Pultrusionskanal 9 die Breite 42 abnimmt und die Dicke 43 zunimmt (Fig. 11 bis 13). Auch bei einem kleinen Abstand als der Breite 42, beispielsweise von 0,5 mm, zwischen den beiden in dem Schnitt parallel zueinander ausgerichteten formgebenden Wandungen 46 im Endbereich des Pultrusionskanales 9 führen Materialtoleranzen bei den Fasern 45 und der Matrix 44 nicht zu einer Blockade des Rohextrudates 9, weil das verformbare Rohextrudat 41 bei Materialtoleranzen in den Bereich des Pultrusionskanales 9 ohne Rohextrudat 41 ausweichen kann, d. h. dass sich lokal die Dicke 43 erhöht und damit die Blockade vermieden wird. Die maximale Querschnittsfläche des Rohextrudates 41 kann somit wesentlich erhöht werden, weil der Freiraum in dem Pultrusionskanal 9 dahingehend dimensioniert ist, dass die bei Materialtoleranzen auftretenden notwendigen Erhöhungen der Querschnittsfläche des Rohextrudates 41 zur Vermeidung von Blockaden vorhanden sind. Die Dicke 43 des Rohextrudates 41 ist die Ausdehnung des Rohextrudates 41 in der Richtung der Öffnung des Pultrusionskanales 9 und/oder in der Richtung senkrecht zu der Breite 42 des Rohextrudates 41. Die Breite 42 des Rohextrudates 41 ist die Ausdehnung des Rohextrudates 41 in der Richtung senkrecht zu der Dicke und/oder die Ausdehnung des Rohextrudates 41 zwischen den beiden in dem Schnitt sich verjüngenden formgebenden Wandungen 46.

Die Relativbewegungsgeschwindigkeit zwischen dem Rohextrudat 41 und den drei formgebenden Wandungen 46 entspricht der Bewegungsgeschwindigkeit des Rohextrudates 41, weil die drei formgebenden Wandungen 4 feststehend sind. Am Anfang und Ende der Pultrusionseinheit 6 sind nicht dargestellte Spannvorrichtungen, insbesondere Spannrollen, ausgebildet, die auf das Rohextrudat 41 eine Zugkraft F₁ und F₂ aufbringen, so dass das Rohextrudat 41 in der Pultrusionseinheit 6 eine Zugkraft aufweist. Die Zugkraft F₁ ist kleiner als die Zugkraft F₂, so dass das Rohextrudat 41 durch den Pultrusionskanal 9 bewegt wird unter einer Zugkraft in dem Rohextrudat 41, insbesondere einer Zugkraft in den Fasern 45 des Rohextrudates 41. Die Spannvorrichtungen, insbesondere Spannrollen, fungieren zusätzlich als Umlenkvorrichtungen, insbesondere Umlenkrollen, so dass das Rohextrudat 41 vor dem Einführen in den Pultrusionskanal 9 und nach dem Ausführen aus dem Pultrusionskanal 9 umgelenkt wird und das Rohextrudat 41 vor dem Einführen in einem Winkel α₁ und nach dem Ausführen in einem Winkel α₂ ausgerichtet ist. Die Winkel α₁ und α₂ sind kleiner als 90°, so dass das Rohextrudat 41 beim Einführen und Ausführen nicht parallel, sondern in einem spitzen Winkel zu der Bewegungsrichtung 54 in dem Pultrusionskanal 9 ausgerichtet ist. Die Umlenkvorrichtungen bringen hierfür auf das Rohextrudat 41 beim Einführen und Ausführen eine Querkraft F_{Q} auf. Die Querkraft F_{Q} ist abhängig von den Winkeln α₁ und α₂.

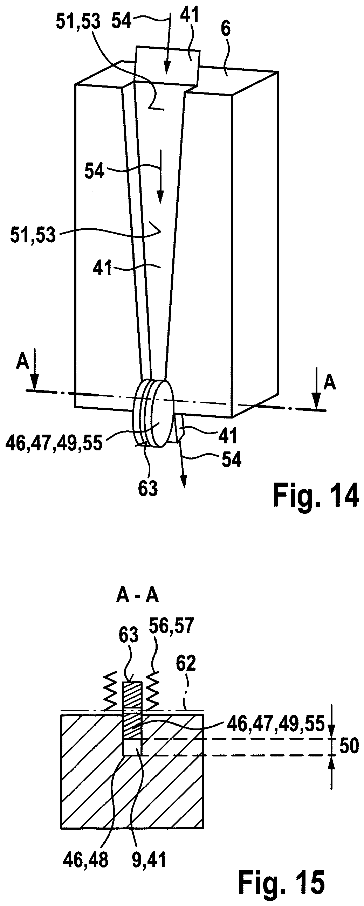

In den Fig. 14 und 15 ist ein zweites Ausführungsbeispiel der Pultrusionseinheit 6 der erfindungsgemäßen Prozesseinheit 5 dargestellt. Im Nachfolgenden werden nur die Unterschiede zu dem ersten Ausführungsbeispiel in den Fig. 9 bis 13 beschrieben. An einem Endbereich des teilweise offenen Pultrusionskanales 9 ist eine Rolle 55 angeordnet. Die Rolle 55 ist rotierend um eine Rotationsachse 62 gelagert und eine radiale Außenseite 63 als Oberfläche der Rolle 55 liegt auf dem zweiten Teil 53 der Außenseite 51 des Rohextrudates 41 auf und verformt den zweiten Teil 53. Damit liegt an diesem Endbereich des Pultrusionskanales 9 mit der Rolle 55 ein geschlossener Pultrusionskanal 9 vor. Die Achse (nicht dargestellt) der Rolle 55 ist mit einem elastischen Element 56 als Feder 57 mit einer Druckkraft auf den zweiten Teil 53 der Außenseite 51 gedrückt, so dass die radiale Außenseite 63 mit einer Druckkraft auf dem zweiten Teil 53 der Außenseite 51 des Rohextrudates 41 aufliegt. Ferner ist die Achse der Rolle 55 in einer Richtung senkrecht zu der Bewegungsrichtung 54 gelagert, so dass die auf dem Rohextrudat 41 aufliegende radiale Außenseite 63 der Rolle 55 als erste formgebende Wandung 47 den Abstand 50 zu der gegenüberliegenden formgebenden Wandung 46 als zweite formgebende Wandung 48 verändert und damit auch die Querschnittsfläche verändert wird. Die Rolle 55 bildet damit auch eine Bewegungswandung 49 als sich bewegende formgebende Wandung 46. Die axiale Ausdehnung der Rolle 55 ist geringfügig kleiner als die Breite 42 des Rohextrudates 41 oder dem Abstand zwischen den in dem Schnitt parallel ausgerichteten formgebenden Wandungen 46, so dass die Rolle 55 teilweise in dem Pultrusionskanal 9 angeordnet ist. Veränderungen der Querschnittsfläche des Rohextrudates 9, insbesondere aufgrund von Materialtoleranzen, können damit durch die Bewegung als Translationsbewegung der Rolle 55 aufgenommen werden ohne dass die Gefahr von Blockaden des Rohextrudates 9 besteht. Die von der radialen Außenseite 63 der Rolle 55 gebildete erste formgebende Wandung 47 führt aufgrund der Rotationsbewegung der Rolle 55 um die Rotationsachse die Translationsbewegung des Rohextrudates 41 mit aus, so dass im Wesentlichen keine Relativbewegungsgeschwindigkeit zwischen der rotierenden radialen Außenseite 63 der Rolle 55 und dem zweiten Teil 53 der Außenseite 51 des Rohextrudates 41 auftritt.

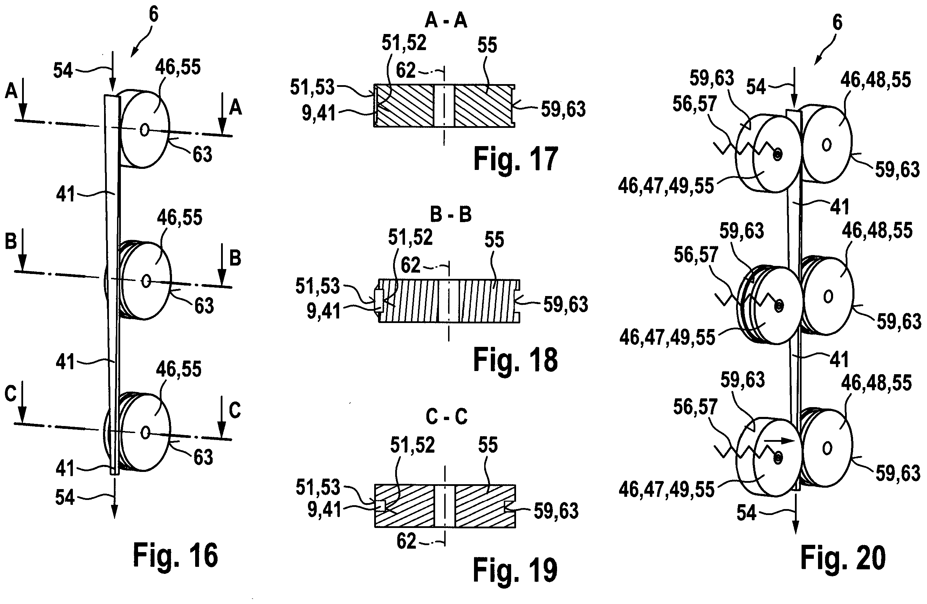

In den Fig. 16 und 19 ist ein drittes Ausführungsbeispiel der Pultrusionseinheit 6 der erfindungsgemäßen Prozesseinheit 5 dargestellt. Im Nachfolgenden werden nur die Unterschiede zu dem ersten Ausführungsbeispiel in den Fig. 9 bis 13 beschrieben. Der Pultrusionskanal 9 ist von den radialen Außenseiten 63 von drei Rollen 55 gebildet. Die radialen Außenseiten 63 weisen somit eine konkave, im Wesentlichen u-förmige Oberfläche 59 auf. Die Breite 42 des Pultrusionskanales 9 und damit des Rohextrudates 41 nimmt von der in Fig. 17 dargestellten ersten Rolle 55 zu der in Fig. 19 dargestellten dritten Rolle 55 ab und die in Fig. Fig. 18 dargestellte Rolle 55 weist eine mittlere Breite 42 zwischen der ersten und dritten Rolle 55 auf. Aufgrund der Rotationsbewegung der Rollen 55 tritt im Wesentlichen keine Relativbewegungsgeschwindigkeit zwischen den radialen Außenseite 63 der Rollen 55 und dem Rohextrudat 41 auf. Das mit einer nicht dargestellten Heizeinrichtung erwärmte Rohextrudat 41 wird an den drei Abschnitten des Pultrusionskanales 9 der drei Rollen 55 verformt. Die Rollen 55 sind ferner mit einer weiteren optionalen Heizeinrichtung, insbesondere elektrischen Widerstandsheizeinrichtung, ausgebildet, so dass die Matrix 44 erwärmt werden kann für die optionale stoffschlüssige Verbindung mit den Fasern 45.

In den Fig. 20 ist ein viertes Ausführungsbeispiel der Pultrusionseinheit 6 der erfindungsgemäßen Prozesseinheit 5 dargestellt. Im Nachfolgenden werden nur die Unterschiede zu dem dritten Ausführungsbeispiel in den Fig. 16 bis 19 beschrieben. Die drei Abschnitte des Pultrusionskanales 9 sind von je zwei Rollen 55 begrenzt. Die radialen Außenseiten 63 der zwei Rollen 55 je eines Abschnitts sind identisch und entsprechen der in dem dritten Ausführungsbeispiel gemäß Fig. 16 bis 19. Die konkave, im Wesentliche u-förmige radialen Außenseiten 63 begrenzen normalerweise je zur Hälfte den Pultrusionskanal 9 an je einem Abschnitt. Die radiale Außenseiten 63 der zwei Rollen 55 je eines Abschnittes liegen normalerweise aufeinander außerhalb der im Wesentlichen u-förmigen Aussparungen. Die Achse einer Rolle 55 je eines Abschnittes ist nicht im Raum beweglich senkrecht zu der Bewegungsrichtung 54 des Rohextrudates 41, so dass diese Rolle 55 eine zweite formgebende Wandung 48 bildet. Die andere Rolle 55 als erste formgebende Wandung 47 je eines Abschnittes ist mit einem elastischen Element 56 als Feder 57 auf die Rolle 55 gedrückt, welche die zweite formgebende Wandung 48 bildet. Die Achse der anderen Rolle 55 als erste formgebende Wandung 47 ist in einer Bewegungsrichtung senkrecht zu der Bewegungsrichtung 54 des Rohextrudates 41 beweglich gelagert, so dass die Rolle 55 als erste formgebende Wandung 47 zusätzlich eine Bewegungswandung 49 bildet, weil der Abstand zwischen den beiden Rollen 55 je eines Abschnittes verändert werden kann. Bei einer Vergrößerung des Abstandes zwischen den beiden Rollen 55 eines Abschnittes wird die Querschnittsfläche des Rohextrudates 41 vergrößert, um Blockaden des Rohextrudates 41 bei Materialtoleranzen zu vermeiden.

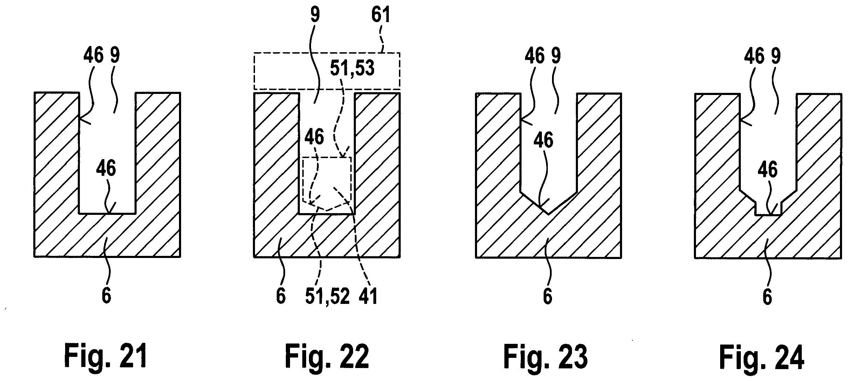

In den Fig. 21 bis 24 sind unterschiedliche Querschnittsformen für feststehende formgebende Wandungen 46 für den im Wesentlichen u- oder v-förmigen Pultrusionskanal 9 abgebildet. In Fig. 22 ist eine Deckwandung 61 und das Rohextrudat 41 strichliert dargestellt. Das Rohextrudat 41 weist einen großen Abstand zu der Deckwandung 61 auf, so dass auch bei großen Materialtoleranzen und einem großen Anstieg der Querschnittsfläche des Rohextrudates 41 das Rohextrudat 41 keinen Kontakt zu der Deckwandung 61 aufweist, so dass auch in Fig. 22 ein teilweise offener Pultrusionskanal 9 vorliegt. Die Deckwandung 61 ermöglicht es, dass das Rohextrudat 41 bzw. die Fasern 45 mit der Matrix 44 leichter in den Pultrusionskanal 9 eingelegt werden können bei der Inbetriebnahme und der teilweise offene Pultrusionskanal 9 vor Verunreinigungen und mechanischen Einflüssen von außen geschützt ist.

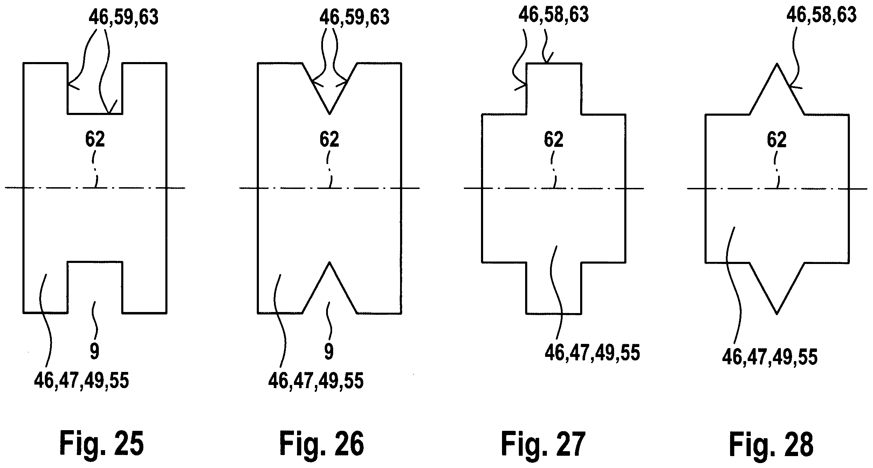

In Fig. 25 und Fig. 26 sind Beispiele für die konkave Oberfläche 59 der radialen Außenseite 63 von Rollen 55 abgebildet. Die Aussparung für den Pultrusionskanal 9 ist in Fig. 25 im Wesentlichen u-förmig und in Fig. 26 im Wesentlichen v-förmig.

In Fig. 27 und Fig. 28 sind Beispiele für die konvexe Oberfläche 58 der radialen Außenseite 63 von Rollen 55 abgebildet. In Fig. 27 ist die konvexe Oberfläche 58 im Wesentlich u-förmig und in Fig. 28 im Wesentlichen v-förmig. Die in Fig. 27 und 28 dargestellten Rollen 55 ermöglichen ein Verformen des zweiten Teiles 53 der Außenseite 51 des Rohextrudates 41 beispielsweise in dem in Fig. 14 und 15 dargestellten Ausführungsbeispiel.

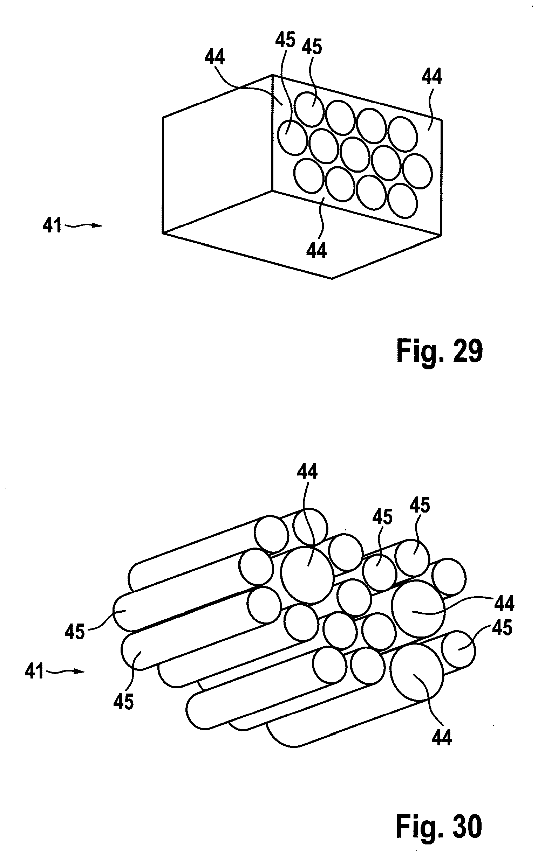

In Fig. 29 und 30 sind zwei Beispiele für Ausbildung der Matrix 44 und der Fasern 45 als Rohextrudat 41 vor dem Einführen in den Pultrusionskanal 9 dargestellt. Die Matrix 44 und die Fasern 45 sind biegbar und auf einer Rolle 22 aufgerollt. In Fig. 29 liegt ein im Querschnitt im Wesentlichen rechteckförmiges Band vor bei dem die Fasern 45 von der Matrix 44 umhüllt sind. In Fig. 30 ist die Matrix 44 auf mehrere strangförmige Teile aufgeteilt zwischen denen und um diese die Fasern 45 angeordnet sind.

Die in den Fig. 1 bis 30 dargestellten Ausführungsbeispiele dienen zur grundsätzlichen Erläuterung des Funktionsprinzips und Beschreibung weiterer erfindungsgemäßer Merkmale, insbesondere eines teilweise offenen Pultrusionskanales 9, einer Prozesseinheit 5 mit einer Pultrusionseinheit 6 und einer Extrusionseinheit 7 sowie zusätzlicher Merkmale wie beispielsweise der notwendigen Heizeinrichtungen 8, 16.

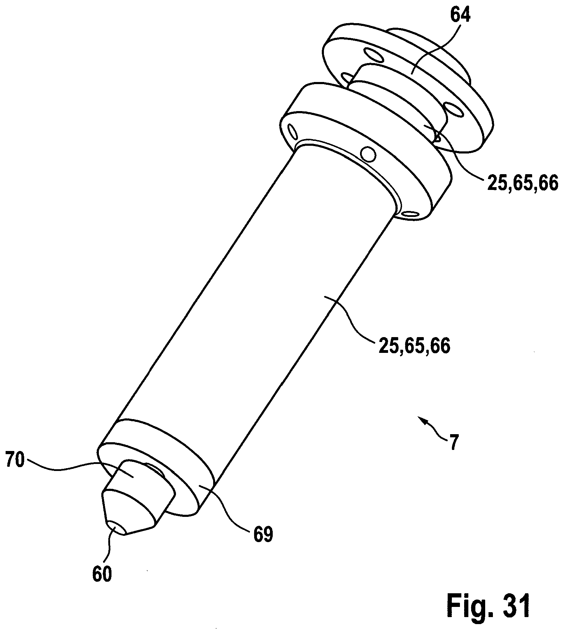

Die wesentlichen erfindungsgemäßen Merkmale der Prozesseinheit 5 mit der Extrusionseinheit 7 und einer optionalen Pultrusionseinheit 6 sind in den nachfolgend erläuterten Fig. 31 bis 34 dargestellt. Notwendige Vorrichtungen, wie beispielsweise eine Heizrichtung 16, sowie die Pultrusionseinheit 6 sind in den Fig. 31 bis 34 nicht abgebildet, so dass insofern auf die Offenbarung in den Fig. 1 bis 30 verwiesen wird.

Die Extrusionseinheit 7 weist einen Extrusionskanal 15 auf, der von nicht dargestellten Heizeinrichtungen beheizt ist. Der Extrusionskanal 15 ist von einem Grundkörper 64 und einem Düsenteil 70 unmittelbar begrenzt. Der Extrusionskanal 15 endet an dem Düsenteil 70 als die Öffnung 60 das Austreten des Extrudates 40.

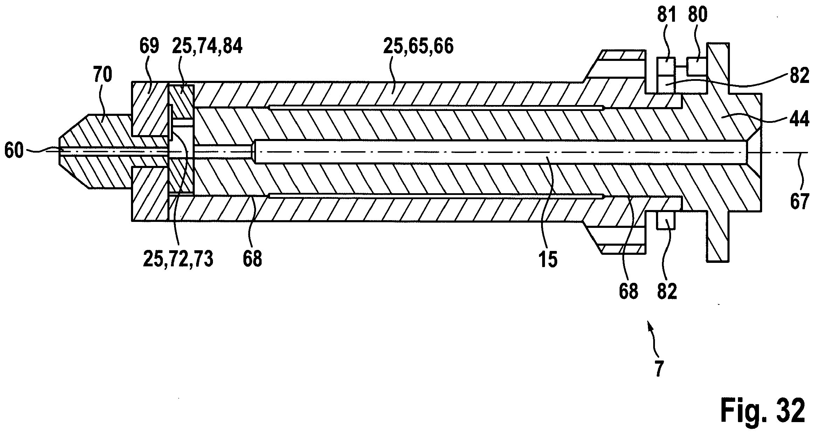

An einer radialen Außenseite des Grundkörpers 64 ist ein Bauteil 65 als eine Hülse 66 an dem Grundkörper 64 befestigt und mit einer Gleitlagerung 68 an dem Grundkörper 64 gelagert, so dass das Bauteil 65 in eine Rotationsbewegung 71 um eine Rotationsachse 67 versetzt werden kann. Die Gleitlagerung 68 ermöglicht somit die Rotationsbewegung 71 des Bauteiles 65. Das Bauteil 65 umschließt einen wesentlichen Anteil des Extrusionskanales 15 und die Rotationsachse 67 des Bauteiles 65 ist im Wesentlichen identisch zu der Längsachse des Extrusionskanales 15. Außenseitig an einem axialen Endbereich des Bauteiles 65 ist ein Zahnring 82 mit Zähnen fixiert und die Zähne des Zahnringes 82 kämmen mit Zähnen eines Zahnrades 81. Das Zahnrad 81 ist mit einer Antriebswelle eines Elektromotors 80 verbunden (nur in Fig. 32 dargestellt), so dass mit dem Elektromotor 80 das Bauteil 65 in die Rotationsbewegung 71 versetzt werden kann.

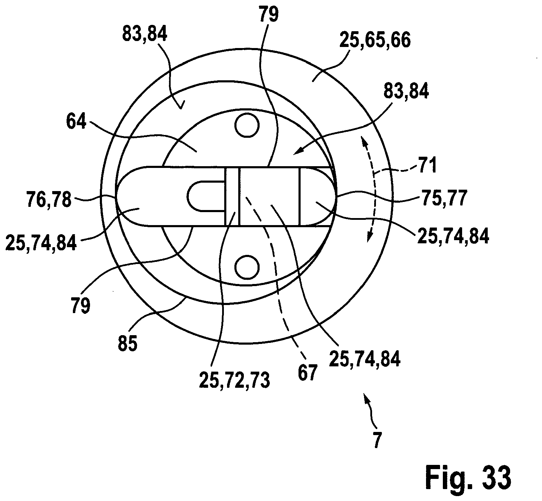

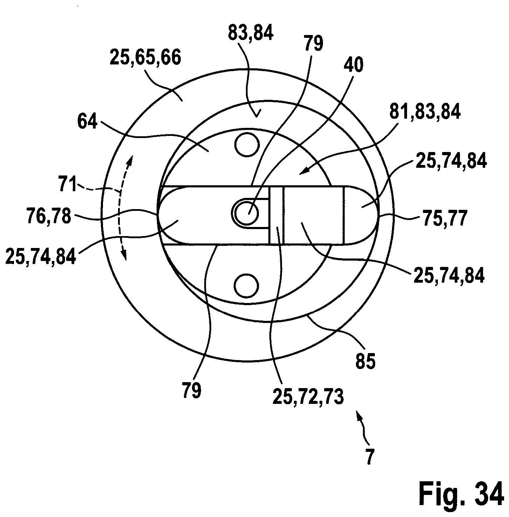

An einem axialen Endbereich des Bauteiles 65 an dem Düsenteil 70 ist eine kreisförmige Aussparung 83 ausgebildet, die exzentrisch zu der Rotationsachse 67 ausgerichtet ist. Die kreisförmige Aussparung 83 weist ein Ende 85 auf. In der kreisförmigen Aussparung 83 ist ein Schneidelement 72 als ein Messer 73 angeordnet. Das Schneidelement 72 und ein Schlitten 74 sind mit einer Gleitlagerung 79 an dem Grundkörper 64 gelagert, so dass von dem Schlitten 74 und dem Schneidelement 72 eine Translationsbewegung zwischen ersten, in Fig. 33 abgebildeten Stellung und einer zweiten, in Fig. 34 abgebildeten zweiten Stellung ausgeführt werden kann. Ein erstes Ende 75 des Schlittens 74 liegt an einem ersten Kontaktbereich 77 an dem Bauteil 65 auf, d. h. an einem Bereich oder einer Auflagefläche des Bauteiles 65, welches die kreisförmige Aussparung 83 begrenzt. In analoger Weise liegt ein zweites Ende 76 des Schlittens 74 an einem zweiten Kontaktbereich 78 an dem Bauteil 65 auf. Der Schlitten 74, die kreisförmige Aussparung 83 und die Gleitlagerung 79 bilden somit eine mechanische Koppelvorrichtung 84 zur mechanischen Koppelung des Schneidelements 72 mit dem rotierenden Bauteil 65 als Hülse 66.

Bei einer Bewegung des Schneidelementes 72 als Messer 73 von der in Fig. 34 dargestellten zweiten Stellung in die in Fig. 33 dargestellten ersten Stellung wird das aus der Öffnung 60 austretende Extrudat 40 abgetrennt bzw. abgeschnitten und hierfür ist eine Rotationsbewegung 71 des Bauteiles 65 um 180° notwendig. Eine weitere Rotationsbewegung 71 des Bauteiles 65 um zusätzliche 180° verursacht eine Translationsbewegung des Schlittens 74 mit dem Messer 73 von der in Fig. 33 dargestellten ersten Stellung in die in Fig. 34 abgebildete zweite Stellung. In der in Fig. 34 abgebildeten zweiten Stellung erfolgt die Extrusion des Extrudates 40 aus dem Extrusionskanal 15. Zum Abtrennen, d. h. Abschneiden, des Extrudates 40 wird von dem Elektromotor 80 als Servoelektromotor 80 das Bauteil 65 in eine Rotationsbewegung 71 von 360° versetzt, so dass das Extrudat 40 abgetrennt wird und anschließend der Schlitten 74 mit dem Messer 73 wieder in die in Fig. 34 abgebildete zweite Stellung bewegt wird und in dieser Stellung bleibt für die weitere Extrusion bei einem stillstehenden Bauteil 65. Hierzu wird der Elektromotor 80 von einer nicht darstellten Steuerungs- und/oder Regeleinheit der Prozesseinheit 5 mit der Extrusionseinheit 7 entsprechend gesteuert. Die beiden Enden 75, 76 des Schlittens 74 liegen ständig an den Kontaktbereichen 77, 78 an dem Bauteil 65 auf, weil der Abstand zwischen den beiden Enden 75, 76 des Schlittens 74 dem Durchmesser der kreisförmigen Aussparung 83 entspricht. Das Schneidelement 72 liegt somit mittelbar mittels des Schlittens 74 auf dem Bauteil 65 auf.

Abweichend hiervon kann der Abstand zwischen den beiden Enden 75, 76 des Schlittens 74 kleiner sein als der Durchmesser der kreisförmigen Aussparung 83, so dass der Schlitten 74 nur ein einem Ende 75 als nur einem Kontaktbereich 77 an dem Bauteil 65 aufliegt und auf das zweite Ende 76 wird von einem elastischen Element, insbesondere einer Feder, eine Kraft in Richtung zu dem Kontaktbereich 77 aufgebracht (nicht dargestellt).

Die in den Fig. 31 bis 34 dargestellte Extrusionseinheit 7 kann an Prozesseinheiten 5 ohne einer Pultrusionseinheit 6 und an Prozesseinheiten 5 mit einer Pultrusionseinheit 6, insbesondere einer in den Fig. 1 bis 30 dargestellten Pultrusionseinheit 6, angeordnet sein.

Insgesamt betrachtet sind mit dem erfindungsgemäßen Verfahren zur Herstellung eines Extrudates 40 und der erfindungsgemäßen Prozesseinheit 5 wesentliche Vorteile verbunden. Die mechanische Koppelvorrichtung 84 ermöglicht es, dass das Schneidelement 72 zuverlässig und sicher zwischen der ersten und zweiten Stellung bewegt wird zum Abtrennen bzw. Abschneiden des Extrudates 40 und zum Extrudieren ohne dass im Bereich der Öffnung 60 ein aufwendiger, einen großen Bauraum benötigender Mechanismus mit einem Elektromotor 80 notwendig ist.

## Patentansprüche

1. Verfahren zur Herstellung eines, vorzugsweise strangförmigen, Extrudates (40) mit den Schritten:
- Einführen einer erhärtbaren Matrix (44) und Fasern (45) bzw. eines Rohextrudates (41) in eine Pultrusionseinheit (6),
- Verformen des Rohextrudates (41) in der Pultrusionseinheit (6) indem eine Außenseite (51) des Rohextrudates (41) während des Bewegens des Rohextrudates (41) durch einen Pultrusionskanal (9) der Pultrusionseinheit (6) an wenigstens einer formgebenden Wandung (46) der Pultrusionseinheit (6) aufliegt,
- Austreten des verformten Rohextrudates (41) aus der Pultrusionseinheit (6),
- Einführen des aus der Pultrusionseinheit (6) ausgetretenen Rohextrudates (41) in eine Extrusionseinheit (7) mit einem Extrusionskanal (15),
- Verformen des Rohextrudates (41) in der Extrusionseinheit (7) und Austreten des zu dem Extrudat (40) umgeformten Rohextrudates (41) aus einer Öffnung (60) der Extrusionseinheit (7),
- Abschneiden des Extrudates indem ein Schneidelement (72) bewegt wird,
**dadurch gekennzeichnet, dass**
ein Bauteil (65) der Extrusionseinheit (7) eine Rotationsbewegung ausführt und mittels einer mechanischen Koppelung zwischen dem rotierenden Bauteil (65) und dem Schneidelement (72) das Schneidelement (72) bewegt wird zum Abschneiden des Extrudates (40), wobei
das rotierende Bauteil (65) als eine Hülse (66) und/oder ein zylindermantelförmiges Bauteil (65) ausgebildet ist, welches den Extrusionskanal (15) mittelbar oder unmittelbar umschließt.

2. Verfahren nach Anspruch 1,
**dadurch gekennzeichnet, dass**
die Rotationsbewegung des Bauteiles (65) mittels der mechanischen Koppelung in eine Bewegung mit einer Bewegungsrichtung im Wesentlichen senkrecht zu der Rotationsachse (67) der Rotationsbewegung des Bauteiles (65) umgewandelt wird.

3. Verfahren nach Anspruch 1 oder 2,
**dadurch gekennzeichnet, dass**
von dem Schneidelement (72) eine Rotationsbewegung und/oder eine Translationsbewegung ausgeführt wird.

4. Verfahren nach einem oder mehreren der vorhergehenden Ansprüche,
**dadurch gekennzeichnet, dass**
das Schneidelement (72) mittelbar, insbesondere mit einem Schlitten (74), oder unmittelbar an einer Aussparung (83) an dem rotierenden Bauteil (65) aufliegt, so dass aufgrund der, vorzugsweise exzentrischen, Geometrie der Aussparung (83) zu der Rotationsachse (67) von dem rotierenden Bauteil (65) auf das Schneidelement (72) mittelbar, insbesondere mit einem Schlitten (74), oder unmittelbar eine Kraft aufgebracht wird zum Bewegen des Schneidelementes (72).

5. Prozesseinheit (5), umfassend:
- eine Pultrusionseinheit (6) mit einem Pultrusionskanal (9) und der Pultrusionskanal (9) von wenigstens einer formgebenden Wandung (46) begrenzt ist,
- eine Extrusionseinheit (7) mit einem Extrusionskanal (15) und einer Öffnung (60) zum Austritt des Extrudates (40) aus dem Extrusionskanal (15),
- eine Schneideeinheit (25) mit einem beweglichen Schneidelement (72) zum Abschneiden des Extrudates (40) mit dem beweglichen Schneidelement (72),
- eine Fördereinrichtung (12) zum Fördern eines Rohextrudates (41) von der Pultrusionseinheit (6) in die Extrusionseinheit (7),
**dadurch gekennzeichnet, dass**
die Schneideeinheit (25) ein in eine Rotationsbewegung versetzbares Bauteil (65) umfasst und das Bauteil (65) mit einer mechanischen Koppelvorrichtung (84) mit dem Schneidelement (72) mechanisch gekoppelt ist, so dass die Rotationsbewegung des Bauteiles (65) die Bewegung des Schneidelementes (72) bedingt, wobei
das rotierende Bauteil (65) als eine Hülse (66) und/oder ein zylindermantelförmiges Bauteil (65) ausgebildet ist, welches den Extrusionskanal (15) mittelbar oder unmittelbar umschließt.

6. Prozesseinheit nach Anspruch 5,
**dadurch gekennzeichnet, dass**
der Abstand zwischen der Rotationsachse (67) des in die Rotationsbewegung versetzbaren Bauteils (65) und dem Extrusionskanal (15) senkrecht zu der Rotationsachse (67) des Bauteiles (65) kleiner ist als Durchmesser, insbesondere kleiner als 70%, 50% oder 30% des Durchmessers, der Extrusionseinheit (7) senkrecht zu der Rotationsachse (67) des in die Rotationsbewegung versetzbaren Bauteiles (65).

7. Prozesseinheit nach Anspruch 5 oder 6,
**dadurch gekennzeichnet, dass**
die Prozesseinheit (5), insbesondere die Extrusionseinheit (7), einen Motor (80), insbesondere einen Elektromotor (80), pneumatischen Motor oder hydraulischen Motor, umfasst und das Bauteil (65) von dem Motor (80) angetrieben ist.

8. Prozesseinheit nach einem oder mehreren der Ansprüche 5 bis 7,
**dadurch gekennzeichnet, dass**
an dem Bauteil (65) eine Auflagefläche, insbesondere Aussparung (83), als mechanische Koppelvorrichtung (84) ausgebildet ist und wenigstens ein Ende (75, 76) des Schneidelementes (72) auf der Auflagefläche, insbesondere Aussparung (83), mittelbar, insbesondere mit einem Schlitten (74), oder unmittelbar aufliegt, so dass eine Rotationsbewegung des Bauteiles (65) eine Bewegung des
Schneidelementes (72) aufgrund des Kontaktes des wenigstens einen Endes (75, 76) auf der Auflagefläche, insbesondere der Aussparung (83), verursacht.

9. Prozesseinheit nach Anspruch 8,
**dadurch gekennzeichnet, dass**
das erste und zweite Ende (75, 76) mittelbar oder unmittelbar ständig auf der kreisförmigen Aussparung (83) aufliegt, weil der Abstand zwischen dem ersten und zweiten Ende (75, 76) im Wesentlichen dem Durchmesser der kreisförmigen Aussparung (83) entspricht.

## Claims

1. A method for producing an extrudate (40), preferably in strand form, comprising the steps:
- introducing a hardenable matrix (44) and fibres (45), or a crude extrudate (41) into a pultrusion unit (6),
- deforming the crude extrudate (41) in the pultrusion unit (6) wherein, during movement of the crude extrudate (41) through a pultrusion channel (9) of the pultrusion unit (6), an outer side (51) of the crude extrudate (41) rests on at least one shaping wall (46) of the pultrusion unit (6),
- discharging the deformed crude extrudate (41) from the pultrusion unit (6),
- introducing the crude extrudate (41) discharged from the pultrusion unit (6) into an extrusion unit (7) having an extrusion channel (15),
- deforming the crude extrudate (41) in the extrusion unit (7) and discharging the crude extrudate (41) tthat has been reshaped to form the extrudate (40) from an opening (60) of the extrusion unit (7);
- cutting the extrudate by moving a cutting element (72),
**characterised in that**
a component (65) of the extrusion unit (7) performs a rotational movement and, by means of a mechanical coupling between the rotating component (65) and the cutting element (72), the cutting element (72) is moved to cut the extrudate (40), wherein the rotating component (65) is in the form of a sleeve (66) and/or a cylindrical jacket-shaped component (65) which indirectly or directly encloses the extrusion channel (15).

2. The method according to claim 1,
**characterised in that**
the rotational movement of the component (65) is converted by means of the mechanical coupling into a movement with a direction of movement substantially perpendicular to the axis of rotation (67) of the rotational movement of the component (65).

3. The method according to claim 1 or 2,
**characterised in that**
a rotational movement and/or a translational movement is performed by the cutting element (72).

4. The method according to one or more of the preceding claims,
**characterized in that**
the cutting element (72) rests indirectly, in particular with a carriage (74), or directly, on a recess (83) on the rotating component (65) so that, due to the preferably eccentric geometry of the recess (83) in relation to the axis of rotation (67), the rotating component (65) can indirectly, in particular by means of a slide (74), directly apply a force to move the cutting element (72).

5. A process unit (5) comprising:
- a pultrusion unit (6) with a pultrusion channel (9) and the pultrusion channel (9) is delimited by at least one shaping wall (46),
- an extrusion unit (7) having an extrusion channel (15) and an opening (60) for the exit of the extrudate (40) from the extrusion channel (15),
- a cutting unit (25) with a movable cutting element (72) for cutting off the extrudate (40) with the movable cutting cutting element (72),
- a conveying device (12) for conveying a crude extrudate (41) from the pultrusion unit (6) into the extrusion unit (7),
**characterised in that**
the cutting unit (25) comprises a rotating component (65) coupled to a mechanical coupling device (84) with the cutting element (72), so that the rotating motion of the rotating component (65) induces motion of the cutting element (72), wherein the rotating component (65) is in the form of a sleeve (66) and/or a cylindrical jacket-shaped component (65) which indirectly or directly encloses the extrusion channel (15).

6. The process unit according to claim 5,
**characterized in that**
the distance between the axis of rotation (67) of the rotating component (65) and the extrusion channel (15) perpendicular to the axis of rotation (67) of the component (65) is smaller than, in particular smaller than 70%, 50% or 30%, the diameter of the extrusion unit (7) perpendicular to the axis of rotation (67) of the rotating component (65).

7. The process unit according to claim 5 or 6,
**characterised in that**
the process unit (5), in particular the extrusion unit (7), has a motor (80), in particular an electric motor (80), pneumatic motor, or hydraulic motor, and the component (65) is driven by the motor (80).

8. The process unit according to one or more of claims 5 to 7,
**characterized in that**
a recess (83) is formed on the component (65) as a mechanical coupling device (84) and at least one end (75, 76) of the cutting element (72) is indirectly or directly coupled to the bearing surface, in particular by means of a carriage (74) so that a rotational movement of the component (65) causes a movement of the cutting element (72).

9. The process unit according to claim 8,
**characterized in that**
the first and second ends (75, 76) are permanently in contact, directly or indirectly, with the circular recess (83), because the distance between the first and second ends (75, 76) substantially corresponds to the diameter of the circular recess (83).

## Revendications

1. Procédé de production d'un extrudat (40), de préférence sous forme de brin, comprenant les étapes:
- introduire une matrice durcissable (44) et des fibres (45), ou un extrudat brut (41) dans une unité de pultrusion (6),
- déformer l'extrudat brut (41) dans l'unité de pultrusion (6) dans laquelle, pendant le mouvement de l'extrudat brut (41) à travers un canal de pultrusion (9) de l'unité de pultrusion (6), un côté extérieur (51) de l'extrudat brut (41) repose sur au moins une paroi de mise en forme (46) de l'unité de pultrusion (6),
- décharger l'extrudat brut déformé (41) de l'unité de pultrusion (6),
- introduire l'extrudat brut (41) déchargé de l'unité de pultrusion (6) dans une unité d'extrusion (7) comportant un canal d'extrusion (15),
- déformer l'extrudat brut (41) dans l'unité d'extrusion (7) et décharger l'extrudat brut (41) qui a été remodelé pour former l'extrudat (40) à partir d'une ouverture (60) de l'unité d'extrusion (7) ;
- couper l'extrudat en déplaçant un élément de coupe (72),
**caractérisé en ce que**
un composant (65) de l'unité d'extrusion (7) effectue un mouvement de rotation et, au moyen d'un couplage mécanique entre le composant rotatif (65) et l'élément de coupe (72), l'élément de coupe (72) est déplacé pour couper l'extrudat (40), dans lequel le composant rotatif (65) se présente sous la forme d'un manchon (66) et/ou d'un composant cylindrique en forme d'enveloppe (65) qui entoure indirectement ou directement le canal d'extrusion (15).

2. Procédé selon la revendication 1,
**caractérisé en ce que**
le mouvement de rotation du composant (65) est converti, au moyen du couplage mécanique, en un mouvement dont la direction est sensiblement perpendiculaire à l'axe de rotation (67) du mouvement de rotation du composant (65).

3. Procédé selon la revendication 1 ou 2,
**caractérisé en ce que**
un mouvement de rotation et/ou un mouvement de translation est effectué par l'élément de coupe (72).

4. Procédé selon l'une ou plusieurs des revendications précédentes,
**caractérisé en ce que**
l'élément coupant (72) repose indirectement, notamment avec un chariot (74), ou directement, sur une cavité (83) du composant rotatif (65) de sorte que, en raison de la géométrie de préférence excentrique de la cavité (83) par rapport à l'axe de rotation (67), le composant rotatif (65) peut indirectement, notamment au moyen d'un coulisseau (74), appliquer directement une force pour déplacer l'élément coupant (72).

5. Unité de traitement (5) comprenant
- une unité de pultrusion (6) avec un canal de pultrusion (9), le canal de pultrusion (9) étant délimité par au moins une paroi de mise en forme (46),
- une unité d'extrusion (7) avec un canal d'extrusion (15) et une ouverture (60) pour la sortie de l'extrudat (40) du canal d'extrusion (15),
- une unité de coupe (25) avec un élément de coupe mobile (72) pour couper l'extrudat (40) avec l'élément de coupe mobile (72),
- un dispositif de transport (12) pour transporter un extrudat brut (41) de l'unité de pultrusion (6) vers l'unité d'extrusion (7),
**caractérisé en ce que**
l'unité de coupe (25) comprend un composant rotatif (65) couplé à un dispositif de couplage mécanique (84) avec l'élément de coupe (72), de sorte que le mouvement rotatif du composant rotatif (65) induit le mouvement de l'élément de coupe (72), dans lequel le composant rotatif (65) se présente sous la forme d'un manchon (66) et/ou d'un composant cylindrique en forme d'enveloppe (65) qui entoure indirectement ou directement le canal d'extrusion (15).

6. Unité de traitement selon la revendication 5,
**caractérisée en ce que**
la distance entre l'axe de rotation (67) du composant rotatif (65) et le canal d'extrusion (15) perpendiculaire à l'axe de rotation (67) du composant (65) est inférieure, notamment inférieure à 70%, 50% ou 30%, au diamètre de l'unité d'extrusion (7) perpendiculaire à l'axe de rotation (67) du composant rotatif (65).

7. L'unité de traitement selon la revendication 5 ou 6,
**caractérisée par le fait que**
l'unité de traitement (5), en particulier l'unité d'extrusion (7), comporte un moteur (80), en particulier un moteur électrique (80), un moteur pneumatique ou un moteur hydraulique, et le composant (65) est entraîné par le moteur (80).

8. L'unité de traitement selon l'une ou plusieurs des revendications 5 à 7,
**caractérisée en ce que**
une cavité (83) est formée sur le composant (65) en tant que dispositif de couplage mécanique (84) et au moins une extrémité (75, 76) de l'élément de coupe (72) est indirectement ou directement accouplée à la surface d'appui, en particulier au moyen d'un chariot (74), de sorte qu'un mouvement de rotation du composant (65) entraîne un mouvement de l'élément de coupe (72).

9. Unité de traitement selon la revendication 8,
**caractérisée en ce que**
les première et deuxième extrémités (75, 76) sont en contact permanent, directement ou indirectement, avec l'évidement circulaire (83), car la distance entre les première et deuxième extrémités (75, 76) correspond sensiblement au diamètre de l'évidement circulaire (83).
